(19) Europäisches Patentamt
European Patent Office
Office européen des brevets

(11) **EP 4 311 934 A1**

(12) **EUROPEAN PATENT APPLICATION**

(43) Date of publication:
**31.01.2024 Bulletin 2024/05**

(21) Application number: **22382724.7**

(22) Date of filing: **28.07.2022**

(51) International Patent Classification (IPC):
**F03D 17/00** (2016.01)   **F03D 80/50** (2016.01)
**F03D 7/04** (2006.01)

(52) Cooperative Patent Classification (CPC):
**F03D 17/0065; F03D 17/033;** F03D 7/046;
F03D 80/504; F05B 2260/4031; F05B 2260/83;
F05B 2260/84

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Fundación Tecnalia Research & Innovation**
**48160 Derio - Bizkaia (ES)**

(72) Inventors:
• **Pujana, Ainhoa**
  **Derio - Bizkaia (ES)**
• **Esteras, Miguel**
  **Derio - Bizkaia (ES)**
• **Perea, Eugenio**
  **Derio - Bizkaia (ES)**
• **Maqueda, Erik**
  **Derio - Bizkaia (ES)**

(74) Representative: **Balder IP Law, S.L.**
**Paseo de la Castellana 93**
**5ª planta**
**28046 Madrid (ES)**

(54) **COMPUTER-IMPLEMENTED METHOD FOR OPTIMIZING THE OPERATION OF A DRIVETRAIN OF A WIND TURBINE**

(57)   A computer-implemented method for training a classifier for failure diagnosis of a drivetrain of a wind turbine, comprising: training a physics-based model (100) of a drivetrain of a wind turbine with operation data (151, 152) of the drivetrain in normality conditions, thus providing a normality hybrid model (200) of the drivetrain of the wind turbine; modelling at least one anomaly situation in the normality hybrid model (200) and training it with operation data (151, 152') of the drivetrain in failure conditions, thus providing a fault hybrid model (500) of the drivetrain of the wind turbine; applying a set of input data of the drivetrain in normality conditions (151) to the normality hybrid model (200), thus obtaining a set of synthetic data in normality conditions (280) for a certain parameter of the drivetrain; applying a set of failure data (150") and a set of synthetic input data (710) associated to the at least one anomaly situation of the drivetrain to the fault hybrid model (500), thus generating a set of synthetic failure data (750) for the at least one anomaly situation; from a set of output data of the drivetrain (152, 152'), the obtained set of synthetic data in normality conditions (280) and the set of synthetic failure data (750) for the at least one anomaly situation, obtaining a set of condition indicators (8105) for the at least one anomaly situation; training a classifier (900) with the set of condition indicators (8105) for the at least one anomaly situation. A computer-implemented method for optimizing the operation of a drivetrain of a wind turbine, comprising using the classifier (900) as previously trained.

FIG. 5A

**Description**

**TECHNICAL FIELD**

The present invention relates to the field of drivetrains in wind turbines. In particular, it relates to methods and systems, based on computer modeling and digitalization, for improving efficiency in the operation of the power conversion systems of wind turbines and/or improving the maintenance of the power conversion systems. The invention is applicable in particular to the wind energy sector.

**STATE OF THE ART**

Wind energy conversion is one of the most promising and reliable energy technologies today. Europe has already 220 GW of wind capacity installed and is planning to install additional 105 GW over the next five years (Wind Energy in Europe: 2020 Statistics and the outlook for 2021-2025. WindEurope, https://windeurope.org/intelligence-platform/product/wind-energy-ineurope-in-2020-trends-and-statistics/). Actors involved in this energy source are continuously researching in this technology with the aim of achieving the best Levelized Cost of Energy (LCOE). According to WindEurope, the expenses in Operation and Maintenance (O&M) accounts for 25-35% of LCOE of wind turbines (Wind energy digitalisation towards 2030. Cost reduction, better performance, safer operations. Published in November 2021 (https://windeurope.org/intelligence-platform/product/wind-energy-digitalisation-towards-2030/)), being the cost of corrective maintenance the 30 to 60% of O&M costs (Hansen AD. Wind Energy Engineering: A Handbook for Onshore and Offshore Wind Turbines. Chapter 8 - Wind Turbine Technologies. 2017, 145-160. doi: 10.1016/B978-0-12-809451-8.00008-4). The possibilities offered by digitalization and artificial intelligence (AI) today can greatly contribute to increase the energy production of wind farms, reducing unplanned interruptions, optimizing O&M works, and extending the lifetime of the components.

Wind turbines systems can be classified depending on the type of generator, gearbox and power converter used. Double Fed Induction Generator (DFIG) with a multiple stage gearbox and a partial scale converter is a widespread technology (Hansen AD, Iov F, Blaabjerg F, Hansen LH. Review of Contemporary Wind Turbine Concepts and Their Market Penetration. Wind Engineering. 2004;28(3):247-263. doi:10.1260/0309524041590099). In the DFIG topology (S. Muller, M. Deicke and R. W. De Doncker, "Doubly fed induction generator systems for wind turbines," in IEEE Industry Applications Magazine, vol. 8, no. 3, pp. 26-33, May-June 2002, doi: 10.1109/2943.999610), the stator windings are directly connected to the constant frequency grid while the rotor winding is connected to the grid through a Pulse Width Modulation (PWM) power converter, using a set of slip rings. The power converters can control the rotor circuit current, frequency, and phase angle shifts (F. Blaabjerg, M. Liserre and K. Ma, "Power electronics converters for wind turbine systems," 2011 IEEE Energy Conversion Congress and Exposition, 2011, pp. 281-290, doi: 10.1109/ECCE.2011.6063781). This kind of induction generators can operate at a wide slip range, typically ±30% of synchronous speed. As a result, they offer many advantages such as high energy yield, reduction in mechanical stresses and power fluctuations and controllability of reactive power. A drawback of the DFIG is the inevitable need for slip rings.

A wind turbine is also equipped with a control system, which will assure a proper operation of the wind turbine under all operational conditions and keep the wind turbine within its normal operating range. Wind turbines contains electrical, mechanical, hydraulic, or pneumatic systems, and require transducers to sense the variables that will determine the control action needed. Most common variables monitored in a control system are wind speed, rotor speed, active and reactive power, voltage, and frequency of the wind turbine's point of connection. In addition, the control system must be able to stop the wind turbine, if necessary. One of the control strategies is the pitch angle control (M. K. Dhar, M. Thasfiquzzaman, R. K. Dhar, M. T. Ahmed and A. A. Mohsin, "Study on pitch angle control of a variable speed wind turbine using different control strategies," 2017 IEEE International Conference on Power, Control, Signals and Instrumentation Engineering (ICPCSI), 2017, pp. 285-290, doi: 10.1109/ICPCSI.2017.8392258), which has proved to be an attractive option for variablespeed operation and for wind turbines larger than 1 MW. Using this control, the blades can be quickly turned away from or into the wind as the power output becomes too high or too low, respectively. The pitching system can be based on a hydraulic system, controlled by a computer system or an electronically controlled electric motor. The pitch control system must be able to adjust the pitch angle by a fraction of a degree at a time, corresponding to a change in the wind speed, to maintain a constant power output.

The critical failure modes of the wind turbine drivetrain system and specifically the electric generator and power conversion system have been analysed (K. Alewine and W. Chen, "A review of electrical winding failures in wind turbine generators," in IEEE Electrical Insulation Magazine, vol. 28, no. 4, pp. 8-13, July-August 2012, doi: 10.1109/MEI.2012.6232004). Based on the sources of failures of electric generator (Tavner, P.J. & Ran, Li & Penman, Jim & Sedding, Howard. (2008), Condition Monitoring of Rotating Electrical Machines. Bibliovault OAI Repository, the University of Chicago Press, doi: 10.1049/PBPO056E), the typologies of faults are the following: *thermal,* due to the effect that currents and overcurrents circulating through the windings have on the insulation and considering that a maximum temperature is allowed depending on the type of insulation and operating conditions; *electrical,* due to the voltage applied to the conductor under normal operating conditions and in anomalous situations like surges coming from the converter; *environmental,* due to the environmental conditions and their possible effects of degradation of the insulating polymer, corrosion phenomena, etc; *mechanical,* mainly due to vibrations; and *thermo-mechanics,* due to cyclic operating conditions with sudden or continuous variations in temperature, which affect differently each material that is part of the cable and its accessories (insulation, screens,...). The electric generator and the power converter are the components that have a greater impact on the reliability, failure rate and unavailability of the wind turbine. Their failure rate is 15% per year of the electric generator and 6.8% in the case of power converters of offshore wind farms (E. Byon, L. Ntaimo, C. Singh, and Y. Ding, "Wind energy facility reliability and maintenance". Handbook of Wind Power Systems, pp. 639-672; Shafiee y Dinmohammadi - An FMEA-Based Risk Assessment Approach for Wind Turbine Systems: A Comparative Study of Onshore and Offshore. 2014). These components are equipped with sensors (temperature, vibrations, electric measurements, ...) and connected to the wind turbine Supervisory Control And Data Acquisition (SCADA) and Condition Based Monitoring (CBM) systems. Thus, a long historical real operation dataset exists for each turbine of a wind farm. Sometimes, this dataset includes recorded anomalies or failure in the operation of the turbine.

Computer modeling and digitalization are increasingly important in the wind energy sector, as they provide tools to improve the design and performance of wind turbines for reducing both capital and operational costs. The massive sensor rollout and the increase of big data processing capacity of the last decade allow to collect and analyze data efficiently, making possible the development and use of digital models (sometimes referred to as digital twins) of wind turbines. Data-driven models extract knowledge from real measurements applying AI techniques, which can help to identify meaningful patterns in the large amounts of data collected from complex systems. In the field of wind energy generation, there are several approaches of this type of models. For instance, spectral analysis of measured currents has been used for health monitoring of main bearings and stator and rotor windings of wind turbines (T. Gerber, N. Martin and C. Mailhes, "Time-Frequency Tracking of Spectral Structures Estimated by a Data-Driven Method," in IEEE Transactions on Industrial Electronics, vol. 62, no. 10, pp. 6616-6626, Oct. 2015, doi: 10.1109/TIE.2015.2458781). In S. Yin, W. Guang, and H. R. Karimi. "Data-driven design of robust fault detection system for wind turbines." Mechatronics, vol. 24, no. 4 pp. 298-306, Dec. 2014, a data-driven model is directly constructed with the objective of detecting and isolating sensor and actuator faults in wind turbines, while research E. Alizadeh, N. Meskin, and K. Khorasani. A negative selection immune system inspired methodology for fault diagnosis of wind turbines. IEEE Trans Cybern, PP(99):1-15, 2016 develops a hierarchical bank of negative selection algorithms (NSAs) to detect and isolate common faults in wind turbines. Research M. Li, D. Yu, Z. Chen, K. Xiahou, T. Ji and Q. H. Wu, "A Data-Driven Residual-Based Method for Fault Diagnosis and Isolation in Wind Turbines," in IEEE Transactions on Sustainable Energy, vol. 10, no. 2, pp. 895-904, April 2019, doi: 10.1109/TSTE.2018.2853990 uses a data-driven fault diagnosis and isolation (FDI) method for wind turbines, which implements long short-term memory (LSTM) networks for residual generator and applies the random forest algorithm for decision making. The main drawback of data-driven FDI methods is that they are designed based on experimental and historical data acquired from the system under normal and faulty conditions. Such a process requires well-developed databases which include labelled anomaly/failure data. Furthermore, the quantity of anomaly/failure data is inherently scarce, resulting in imbalanced datasets. As a consequence, the accuracy of data-driven methods is generally poor for the cases that are not included in the training dataset. In addition, black box models (e.g. deep learning models) show low explainability, making it difficult for domain experts to interpret the results and gain the required trust to make decisions based on the output of the models.

Therefore, there is a need to develop new methods and systems for supervising and/or optimizing the operation and/or maintenance of wind turbines and/or predicting failure therein, which overcome the drawbacks of conventional ones.

## DESCRIPTION OF THE INVENTION

The present invention overcomes the drawbacks of conventional methods and systems for condition monitoring of wind turbines, by providing a computer-implemented method and system for optimizing the operation and/or maintenance of a drivetrain of a wind turbine and improving its maintenance workflow. In the context of the present invention, the drivetrain is to be understood as a set of components involved in the wind energy conversion. The optimization is achieved using the information obtained from a classifier used by the proposed method.

The method is based on different models of the drivetrain, including a physics-based model thereof which is trained with data analytics techniques using real operation data. The physics-based model of the drivetrain is a mathematical model representing physical phenomena. The physics-based model involves a plurality of model parameters. It describes the relationship between physical magnitudes that characterizes the transformation of wind speed energy into mechanical power and mechanical power into electrical power. The physics-based model is trained with data analytics techniques that use historical and actual operational data, generating a so-called normality hybrid model.

Training the physics-based model with data driven algorithms using operational data in normality conditions enables calibrating values of at least some of the model parameters which define the physics-based model, resulting in a trained physics-based model, referred to as normality hybrid model. In other words, when the physics-based model is trained with normality data (data representing normal operation), the model becomes a normality hybrid model. In the context of the present invention, the term "hybrid" refers to the combination of a mathematical model involving physical parameters with data analytics involving real data (measurements). The selected values of those parameters are obtained minimizing the difference between a prediction obtained by the physics-based model using data driven optimization algorithms trained with real operation data inputs, and their corresponding well-known real operation data output.

Once that normality hybrid model is constructed, it can be extended or adapted to represent failure situations, resulting a so-called fault model. This resulting new model is also trained with historical and eventually actual operational data of both normal and failure operation. This is done using real failure operation data inputs, which are fed to the failure models. In other words, when the normality hybrid model is adapted to represent a failure and is trained with failure data (data representing failure operation), the normality hybrid model becomes a fault hybrid model. Feeding the fault models with failure data enables calibrating values of the fault model parameters which define the fault models. The selected values of these fault model parameters are obtained minimizing the difference between the prediction obtained by the fault model using failure operation data inputs, and their corresponding well-known real operation data failure outputs. As a result, the so-called fault hybrid model of the power conversion system (drivetrain) of a wind turbine is obtained, which takes into account both data of the drivetrain in normal operation and in failure operation.

A digital twin can be defined as a virtual representation of a real-life system (in this case, the drivetrain of a wind turbine), having the same behaviour as the real one. The digital twin of the drivetrain is therefore made of the physics-based model, fault models and their connection with the real system. This connection refers to the information transferred (automatically or manually) from the wind turbine to the digital twin and the information that can potentially be transferred from the digital twin to the system and the operator. The digital twin can be applied for different applications: On the one hand, the fault hybrid model can be used to generate synthetic data of failure scenarios and even synthetic data of events that have never happened before. This allows acquiring knowledge of the behavior of the drivetrain in certain conditions that in other case would not be possible to acquire. The digital twin therefore enables to simulate realistic scenarios that are difficult or costly to create in a real system. These scenarios can be used for the prescriptive analysis of new operating conditions, or for testing extreme conditions and responses to anomalies or failures. This synthetic data is generated using real failure operation data and the fault hybrid model.

On the other hand, the digital twin allows to enhance existing data driven models (e.g. a machine learning classifier) for estimating the drivetrain status and helping in the decision-making process over its life cycle (e.g. to diagnose abnormal operation of the drivetrain or, anomalies in measuring sensors, and trigger an alarm). In fact, the synthetic data generated by the digital twin (in particular, by the fault hybrid model) can be used to augment the training dataset and improve the generalisation capacity of the existing data driven models (e.g. a classifier). Additionally, the digital twin can be used to create new features (also referred to as condition indicators) that can be used as new inputs in, e.g., a classifier. These features are calculated by comparing real operational (e.g. SCADA data) and/or synthetic data with respect to normality data (predictions) generated by the normality hybrid model. In fact, the normality data generated by the normality hybrid model is used as a baseline to compare real asset with each digital replica in normality conditions (without fault) in the same operating conditions (such as wind speed, pitch angle, torque, nacelle temperature).

In summary, the proposed methodology combines physics-based models and data-driven models for the drivetrain of a wind turbine to represent a specific operation context, both in normal and anomaly or failure conditions. By enhancing the physics-based model with data-driven techniques, the physics-based model is optimized to the specific design and operation characteristics of the wind turbine, in such a way that it can be used to generate synthetic data, classify failures and predict anomalies, and optimize the operation and maintenance of the power conversion system (drivetrain) of a wind turbine.

The development of data driven algorithms for diagnosing normality or failure conditions is a complex task that involves: i) defining the condition indicators, ii) labelling correct operation data and failure operation data, iii) conceptualization of the classification model (supervised or unsupervised), iv) the validation of the model and the analysis of its accuracy (e.g.: number of false positives or negatives), and v) the analysis of whether it is representative of a machine or set of machines (for example, whether or not the model is valid only for a single wind turbine or for a set of different wind turbines). The proposed method and models can add value in this endeavour by providing additional synthetic data to strengthen the dataset later used by the classification algorithm.

In a first aspect of the invention, a computer-implemented method for training a classifier for failure diagnosis of a drivetrain of a wind turbine is provided. The method comprises: training a physics-based model of a drivetrain of a wind turbine with operation data of the drivetrain in normality conditions, thus providing a normality hybrid model of the drivetrain of the wind turbine; modelling at least one anomaly situation in the normality hybrid model and training it with operation data of the drivetrain in failure conditions, thus providing a fault hybrid model of the drivetrain of the wind turbine; applying a set of input data of the drivetrain in normality conditions to the normality hybrid model, thus obtaining a set of synthetic data in normality conditions for a certain parameter of the drivetrain; applying a set of failure data and a set of synthetic input data associated to the at least one anomaly situation of the drivetrain to the fault hybrid model, thus generating a set of synthetic failure data for the at least one anomaly situation; from a set of output data of the drivetrain, the obtained set of synthetic data in normality conditions and the set of synthetic failure data for the at least one anomaly situation, obtaining a set of condition indicators for the at least one anomaly situation; training a classifier with the set of condition indicators for the at least one anomaly situation.

In embodiments of the invention, the physics-based model of the drivetrain of the wind turbine comprises a first module representing an aero-dynamical conversion stage of the drivetrain and a second module representing an electro-mechanical conversion stage of the drivetrain.

In embodiments of the invention, the normality hybrid model is obtained as follows: providing a physics-based model of the drivetrain of the wind turbine, the physics-based model being represented by a plurality of model parameters and a set of equations representing energy conversion in the drivetrain of the wind turbine; feeding the physics-based model with operation data of the drivetrain in normality conditions, the operation data comprising real operation data inputs and real operation data outputs; obtaining a prediction of at least one of the following parameters: generated electric power, phase currents, phase voltages and electromagnetic torque; selecting values of at least some of the model parameters, wherein said values minimize a difference between said prediction and real operation data outputs corresponding to said real operation data inputs, thus obtaining the physics-based model trained with operation data.

In embodiments of the invention, the fault hybrid model is obtained as follows: modelling at least one anomaly situation in the normality hybrid model; feeding the normality hybrid model which includes at least one modelled anomaly situation with operation data of the drivetrain in failure conditions; obtaining a prediction of a parameter indicative of a faulty situation; selecting values of at least some of the model parameters defining the normality hybrid model modelled with at least one anomaly situation, wherein said values minimize a difference between said prediction and real operation data outputs corresponding to the real operation data inputs, thus obtaining the calibrated fault-hybrid model.

In embodiments of the invention, the at least one anomaly situation is modelled by means of at least one failure model.

In embodiments of the invention, the at least one failure model is represented by a plurality of failure parameters and a set of equations representing a failure in the energy conversion of the drivetrain of the wind turbine.

In a second aspect of the invention, a computer-implemented method for optimizing the operation of a drivetrain of a wind turbine, comprising using the classifier as trained in the first aspect of the invention.

In embodiments of the invention, the method comprises: from actual operation output data and normality synthetic data obtained from the normality hybrid model when it is fed with actual operation input data, obtaining a condition indicator; providing the condition indicator to the trained classifier; outputting by the trained classifier an output indicating whether the condition indicator corresponds to a failure situation or to a non-failure situation.

In embodiments of the invention, the method further comprises: when the classifier determines that the drivetrain operates under anomaly conditions, triggering an alarm.

In embodiments of the invention, the method further comprises, when the condition indicator corresponds to a failure situation, actuating on the drivetrain of the wind turbine.

In a third aspect of the invention, a device comprising processing means is provided, configured to perform the method according to the first aspect of the invention.

In a fourth aspect of the invention, a device comprising processing means is provided, configured to perform the method according to the second aspect of the invention.

In a fifth aspect of the invention, a computer program product is provided, comprising computer program instructions/code for performing the method according to the first aspect of the invention and/or to the second aspect of the invention.

In a sixth aspect of the invention, a computer-readable memory/medium is provided, that stores program instructions/code for performing the method according to the first aspect of the invention and/or to the second aspect of the invention.

The proposed methodology and models address the previously explained limitations of the current data-driven models. On the one hand, they enable: synthetic data generation for anomaly/failure conditions and for never-happened events that can be used to augment and balance existing datasets and improve the generalization capacity of the data driven models. On the other hand, the hybrid models preserve the physical design relationships which facilitates the explainability of the models and increases the trust of end users.

The proposed method and system have been contrasted and validated with operation data of a real wind farm, including labelled failure conditions. In particular, a use case of a drivetrain based on a double fed induction generator (DFIG) and its corresponding partial-scale power converter is proposed. Nevertheless, the proposed method and system are applicable to other wind conversion technologies (e.g. permanent magnets generator).

Additional advantages and features of the invention will become apparent from the detailed description that follows and will be particularly pointed out in the appended claims.

## BRIEF DESCRIPTION OF THE DRAWINGS

To complete the description and in order to provide for a better understanding of the invention, a set of drawings is provided. These drawings form an integral part of the description and illustrate an embodiment of the invention, which should not be interpreted as restricting the scope of the invention, but just as an example of how the invention can be carried out. The drawings comprise the following figures:

Figure 1 schematically shows a physic-based model of a certain system and a process of training the physics-based model with real operation data, according to embodiments of the invention.

Figure 2A shows a block diagram of a physics-based model comprising two modules of a power conversion drivetrain of a wind turbine, according to embodiments of the invention. Figure 2B shows in more detail the physics-based model of Figure 2A. Figure 2C shows a block diagram of a normality hybrid model of a power conversion drivetrain of a wind turbine, according to embodiments of the invention.

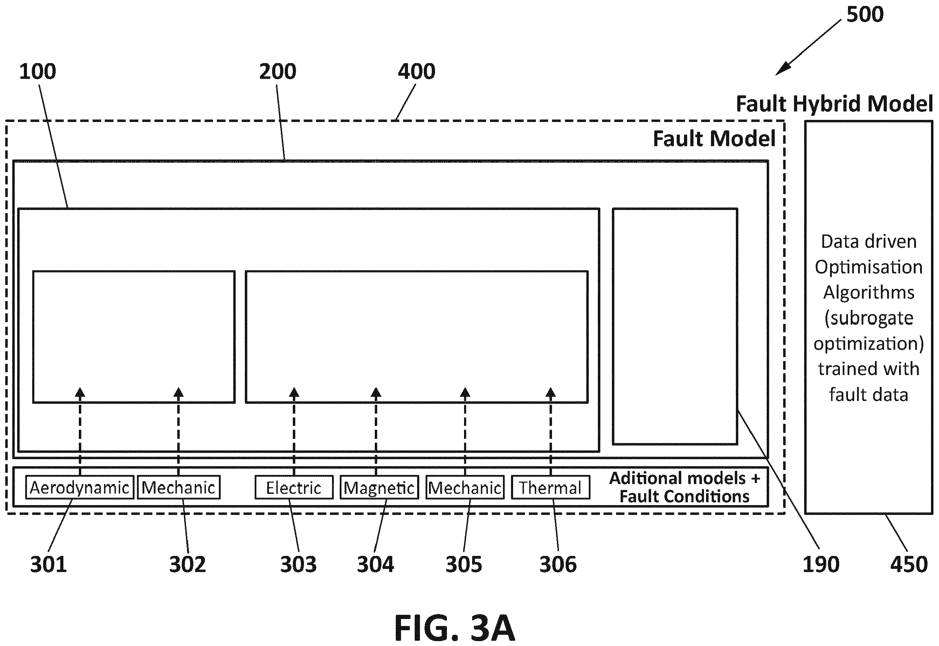

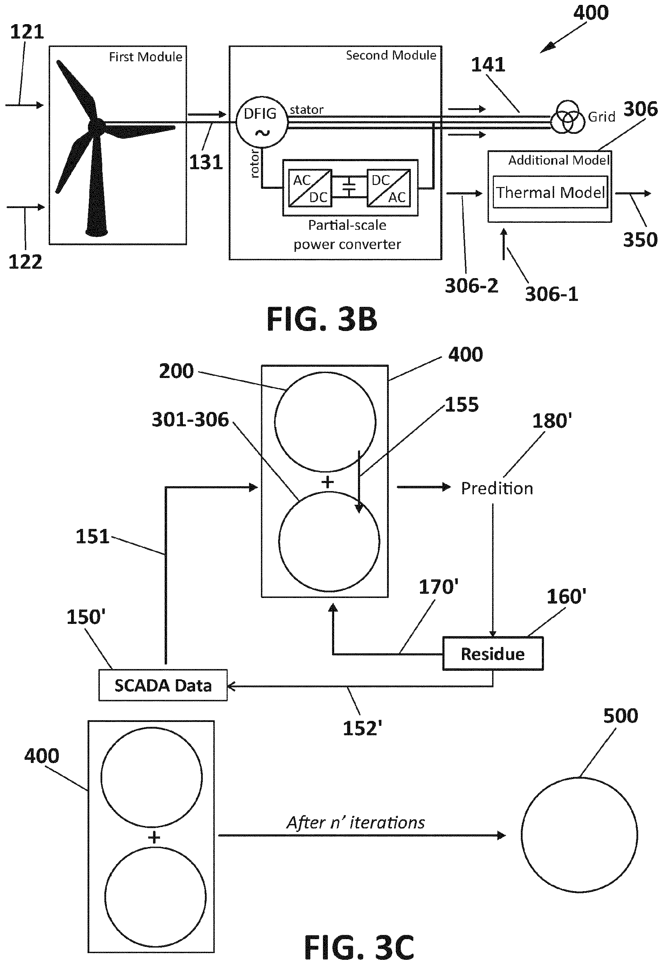

Figure 3A shows a block diagram of a fault hybrid model of a power conversion drivetrain of a wind turbine, according to embodiments of the invention. The fault hybrid model is based on a normality hybrid model, with additional models or conditions representing anomaly or failure situations, duly calibrated. Figure 3B schematically shows an example of a normality hybrid model with an additional model, in particular a thermal model, representing an anomaly or failure situation, according to embodiments of the invention. Figure 3C schematically shows a fault model of a power conversion drivetrain and a process of training the fault model with real operation data, according to embodiments of the invention.

Figure 4A shows a block diagram of synthetic data generation using a fault hybrid model according to embodiments of the invention. Figure 4B shows a block diagram of synthetic data generation using a plurality of fault hybrid models according to embodiments of the invention.

Figure 5A shows a schematic block diagram of a proposed method for training a failure classifier according to embodiments of the invention. Figure 5B shows a schematic block diagram of a proposed method for optimizing the operation of a drivetrain of a wind turbine using the trained classifier, according to embodiments of the invention.

Figure 6 shows a representation in Matlab-Simulink of a wind turbine drivetrain physics-based model according to embodiments of the invention.

Figure 7 shows the generated active power (kW) versus wind speed (m/s) of the wind turbine drivetrain modelled in Figure 6. Four different power curves are illustrated: real data (measured in the SCADA system); simulation using the model, without calibration; simulation using the model, after first calibration (6 parameters); and simulation using the model, after second calibration (7 additional parameters).

Figure 8 shows a representation in Matlab-Simulink of a thermal model (thermal circuit of an electric generator stator winding) added to the normality hybrid model of the wind turbine drivetrain, used to model failure in the thermal circuit of the stator winding of the drivetrain generator.

Figures 9A-9D show five labelled anomaly cases of overheating during real operation (wind speed and active power signals).

Figures 10A-10E show electric generator stator winding temperature values during overheating failure-labelled cases (real and simulated).

Figure 11 shows a methodology for synthetic data generation applied to an electric generator stator winding overheating scenario formed of a data-driven stochastic failure model and a normality hybrid model, according to an embodiment of the invention.

Figure 12 shows the stator winding temperature calculated by a fault hybrid model (in this case, thermal model) from synthetic input variables (non-bold lines) and stator winding temperature as measured by the SCADA system (bold lines).

**DESCRIPTION OF A WAY OF CARRYING OUT THE INVENTION**

The following description is not to be taken in a limiting sense but is given solely for the purpose of describing the broad principles of the invention. Next embodiments of the invention will be described by way of example, with reference to the above-mentioned drawings, showing apparatuses and results according to the invention.

Next, different stages of a method for improving / optimizing the operation and/or the maintenance of the drivetrain of a wind turbine, are disclosed. Non-limiting examples of components of the drivetrain involved in the wind energy conversion are: main bearing, pitch system, gearbox, electric generator, power converter, bearings and control system.

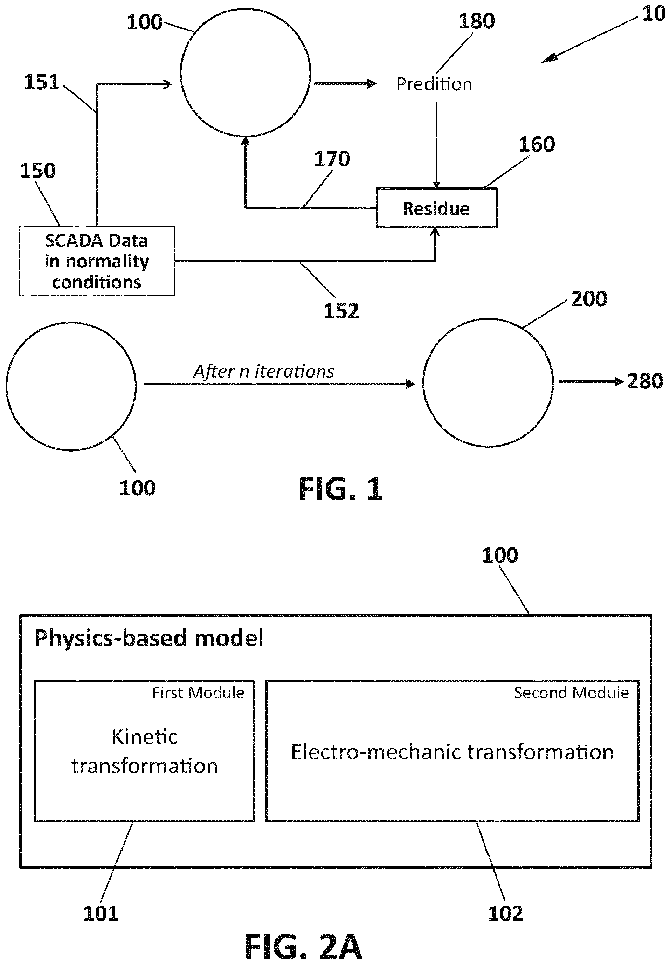

The method is based on computer modelling, simulation and digitalization. In a first stage of the proposed method, a physics-based model 100 of a power conversion drivetrain of a wind turbine is provided. The physics-based model 100 can be a newly created model or an already existing physics-based model. A physics-based model 100 of something (for example, of a device or system, such as a power drivetrain of a wind turbine) is generally disclosed in Figure 1. Figure 1 also shows an optimization process 10 for the training of the physics-based model 100. The physics-based model 100 of a power drivetrain of a wind turbine is represented by a plurality of model parameters and a set of equations that represent the conversion from wind kinetic energy to electric energy. In other words, it is a mathematical model representing the physical phenomena of power conversion occurring in the drivetrain, transforming kinetic energy in electric one. The physics-based model 100 is constructed considering system design parameters. It describes the relationship between physical magnitudes that characterizes the transformation of kinetic energy in the wind into mechanical power and mechanical power into electrical power.

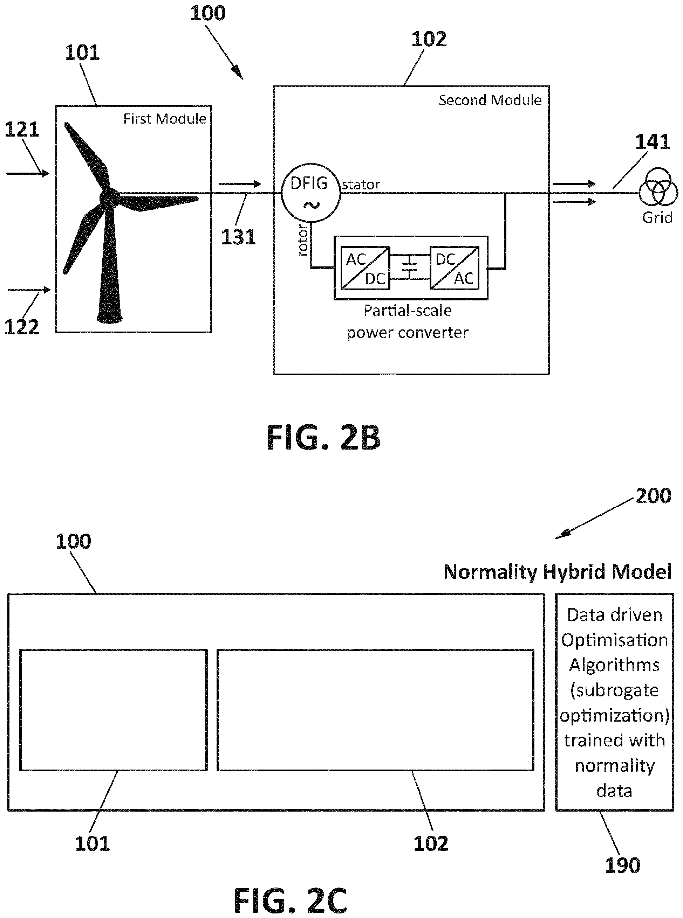

A block diagram of a non-limiting example of physics-based model 100 of a power conversion drivetrain of a wind turbine is schematized in Figure 2A. The physics-based model is depicted in more detail in the example of Figure 2B, in which the modelled drivetrain uses a double fed induction generator (DFIG) with a back-to-back power converter. However, other wind energy conversion technologies could be used alternatively, such as permanent magnet generator (PMG) with full converters or squirrel cage induction generator (SCIG), among others. The physics-based model 100 models the set of components involved in the wind energy conversion, such as the main bearing, pitch system, multiplier (gearbox), electric generator, power converter and control system thereof. In Figures 2A-2B, the physics-based model 100 is divided in two main modules 101, 102. These models can be used coupled together or operate in an independent way, depending on the available operational data. The first module 101 represents the conversion of kinetic energy in the wind into mechanical power, schematically represented in Figure 2B by the blades and the gearbox of the wind turbine. The wind hits the blades of the wind turbine and generates the turning of the rotor at low speed in the main shaft. This low speed can be increased using a gearbox. The mechanical torque obtained after the gearbox in 101 feeds the second module 102. The second module 102 represents the electro-mechanical conversion stage of the drivetrain, schematically represented in Figure 2B by the double fed induction generator (DFIG), a partial-scale power converter and the corresponding control system, not shown, that allows optimal operation of the drivetrain. The electric generator and the corresponding power converter make possible the conversion from the mechanical torque into electric power.

In the transformation carried out in the first module, the mechanical power extracted from the kinetic energy in the wind is determined by parameters such as the air density, the rotor swept, the wind speed and the power coefficient. Other parameters related with the main shaft of the drivetrain are usually also involved in the transformation. Non-limiting examples of these parameters are the wind turbine inertia constant, the shaft spring constant, the shaft mutual damping and the pitch angle.

In the transformation carried out in the second module, in which mechanical power is converted into electrical power, the involved key elements are the electric generator and its corresponding power converter. When the modelled drivetrain uses a DFIG, the electrical part of the machine can for example be modelled by a fourth-order state-space model, and the mechanical part can for example be modelled by a second-order system. It involves the resolution of several equations, both from the electrical and the mechanical systems. Non-limiting examples of parameters involved in this transformation are: stator resistance and leakage inductance, magnetizing inductance, total stator inductance, q axis stator voltage and current, d axis stator voltage and current, stator q and d axis fluxes, angular velocity of the rotor, rotor angular position, number of pole pairs, reference frame angular velocity, mechanical angular velocity, electrical angular velocity, mechanical rotor angular position, electrical rotor angular position, electromagnetic torque, shaft mechanical torque, combined rotor and load inertia coefficient, combined rotor and load inertia constant, combined rotor and load viscous friction coefficient, total rotor inductance, rotor resistance and leakage inductance, q axis rotor voltage and current, d axis rotor voltage and current, rotor q and d axis fluxes, DC bus voltage regulator gains, grid-side converter current regulator gains, rotor-side converter current regulator gains.

Depending on the nature of the equipment it may be difficult to obtain the value of the complete set of design parameters. In this case, estimations are needed, which may impact on the model performance. Nominal values of DFIG values, as rated power, voltage, current, frequency, number of pole pairs or angular velocity of the rotor are usually known, but specific values corresponding to the design of the stator winding (stator resistance and leakage inductance, magnetizing inductance, total stator inductance) are rarely known.

The inputs 151 to the physics-based model 100 (inputs 121, 122 to the first module 101) are real values (measurements) in normality conditions, such as SCADA values. In the model shown in Figure 2B, these inputs are real values of the wind speed 121 (for example, in meters per second, m/s) that hits the turbine blades and the pitch angle 122 (for example, in degrees, deg) of the blades taken at certain time intervals, such as periodically. In embodiments of the invention, modules 101, 102 can be modelled independently from each other. In this case, real values in normality conditions of mechanic torque 131 in the main shaft of the wind turbine can also be an input of the model 100 when the second module 102 is modelled independently. More precisely, while, in general, data 151, 152 used to train the physics-based model 100 is considered data in normality conditions, in fact certain input data 151, due to its nature, may not be distinguished between failure and normality. This is the case, for example, of input data corresponding to the wind velocity 121 which, as such, cannot be considered to represent a failure condition. Other input data 151, such as the mechanical torque 131, can indeed represent either a normality condition or a failure condition. Similarly, the output data 152, 141 can in general represent either a normality condition or a failure condition. Now, the data 151, 152 used to train the physics-based model 100 is data in normality conditions. The data (in particular, certain input data 131 and output data 152, 141, since other input data 121, 122 are by nature data in normality conditions) used to train the physics-based model 100 has been previously labelled as "data in normality conditions", preferably by a human operator. Thus, the physics-based model 100 is trained with data in normality conditions. Input values 151, 121, 122, 131 are discrete values of historical data in normality conditions, collected at a plurality of time instants within a certain time horizon. Usually, available data corresponds to SCADA data registered, for example, each 10 minutes. However, data with higher acquisition frequency could be also available. The acquisition frequency may vary from microseconds (1 $\mu$s = $10^{-6}$ seconds), such as every 100 $\mu$s or every 1 ms, to seconds or minutes, such as every 1 second, every 1 minute or every 10 minutes. The acquisition frequency may depend on different circumstances, such as the type of parameter being acquired.

Referring again to the exemplary model of Figure 2B, the output 131 of the first module 101 is a prediction of the generated mechanical torque that acts on the shaft of the double fed induction generator (DFIG) (which belongs to the second module 102). This prediction is obtained by computing the equations of which the model is comprised. The second module 102 takes as input the output 131 of the first module 101, that is to say, the mechanical torque acting on the shaft of the DFIG. The output 141 of the second module 102 comprises a prediction of the generated electric power and its related signals such as phase currents, phase voltages, frequency and/or electromagnetic torque at certain time intervals, to be delivered to the electric grid. In a preferred embodiment, the output 141 is a prediction of the generated electric power and its corresponding phase currents. This prediction is obtained by computing the equations of which the model is comprised. This prediction is referred to as 180 in Figure 1.

Thus, real operation data in normality conditions 150 comprises real inputs in normality conditions (discrete historical values of real operation data, typically measurements) 151 to the physics-based model 100 (e.g. measurement values of certain parameters, such as wind speed, pitch angle or mechanical torque, as is the case in the exemplary model of Figure 2B) and real outputs 152 (e.g. measured outputs of certain parameters, for example, generated electric power and phase currents, corresponding or associated to the real inputs 151) of the drivetrain of the wind turbine being modelled. Real operation data 150 are discrete values of historical data collected at a plurality of time instants within a certain time horizon. Reference 180 represents the prediction of a parameter, such as a prediction of the generated electric power (prediction 141 in Figure 2B).

Once the physics-based model 100 is built, it is optimized (trained) applying on it one or more data driven optimization algorithms 190 using historical real operation data 150 in normality conditions, so that a normality hybrid model 200 is obtained, as shown in Figures 1 and 2C, which is an enriched model with real operation data. The optimization / training process is schematized in Figure 1. Figure 1 shows a training process or algorithm 10 for the calibration of the physics-based model 100. In Figure 1, real operation data in normality conditions 150 are fed as real inputs 151 to the physics-based model 100 or provided as real outputs 152 to a further stage of the calibration process. The calibration process includes optimizing, by means of an objective function to minimize a residue 160, design parameters (also called model parameters) whose exact values may have been estimated considering certain physical constraints (for example, within a range of given realistic intervals). Preferably, among the design parameters to be optimized, there are parameters associated to the electro-mechanic conversion stage (such as, but not limiting, electric generator, power converter and wind turbine control), parameters associated to the aero-dynamical conversion, parameters associated to control strategy and parameters associated to the pitch system and mechanical part of the drivetrain. Non-limiting examples of parameters associated to the electro-mechanic conversion stage that can be selected for optimization are: stator winding resistance, rotor winding resistance, generator inertia constant and generator friction factor, power converter grid-side coupling resistance, power converter grid-side coupling inductance, converter line filter capacitor. Non-limiting examples of parameters associated to the aero-dynamical conversion stage that can be selected for optimization are: wind turbine inertia constant, shaft mutual damping and shaft spring constant. Non-limiting examples of parameters associated to the control strategy that can be selected for optimization are: DC bus voltage regulator gains, speed regulator gains and wind speed at nominal speed and at Cp max.

Thus, the training process 10 allows estimating, from a set of historical operating data (dataset) in normality conditions 151, 152, 121, 122, 131 that includes a sufficient representation of the system behavior, the value of certain design variables (parameters) of the physical model 100 unknown a priori, in order to minimize the difference between output values (prediction) 141, 180 of variables of the physical model 100 and the real system values (outputs) 152. The training process 10 shown in Figure 1 aims to minimize one or more cost functions (or objective functions). In a particular embodiment, there are two cost functions, the first one is the difference between the active power estimated (predicted) by the physics-based model 100 and the real active power (generally represented by reference 152) provided typically by the SCADA, and the second one is the difference between the phase current estimated (predicted) by the physics-based model 100 and the real phase current (generally represented by reference 152) provided typically by the SCADA, but there may be a different number of cost functions. In the example, the first cost function is aimed at minimizing difference in power and the second cost function is aimed at minimizing difference in phase current. An objective function of the process is the minimization of the residue 160 defined as the difference between the physics-based model output (prediction of power, for example) 180 and the real operation data 152 (e.g. output power) for given real inputs 151 (e.g. wind speed or torque). The optimization algorithm aims to find a combination of parameter values that minimize the difference between the output (prediction 180) of the physics-based model 100 and the measured data 152.

In embodiments of the invention, the optimization algorithm used by the training process for calibrating (tuning or adjusting) the parameters is a global solver which searches for a global minimum of a cost function $\min_{x} f(x)$ with multivariate input variable $x$ subject to linear and non-linear constrains, and some finite bounds. In a particular example, the objective function is defined as the mean absolute percentage error (MAPE) between the estimated parameter (prediction) and the real measured value of the parameter (the parameter being, for example, the active power or the phase current).

In other words, the training process is done as follows: Using real operation data 150 in normality conditions (real input data 151), a first prediction 180 of one or more parameters (for example the generated active power and/or at least one related signal or parameter (phase currents, phase voltages and/or electromagnetic torque) is made. By comparing real outputs 152 (operation data in normality conditions, e.g. measurement values of output power and/or at least one related signal or parameter provided by the drivetrain of the wind turbine for the given real inputs 151) with the obtained prediction 180, a residue 160 is obtained. Depending on this residue 160, one or more model parameters which define the physics-based model 100 are modified (stage 170). The training process is repeated n times, as schematically represented in the lower part of Figure 1. After n iterations, the physical model 100 is considered a normality hybrid model 200. In general, the training process continues for a given number of iterations or until a point is found for which the objective function is below a threshold. The normality hybrid model 200 is therefore composed of a physics-based model enriched with operation data (such as SCADA data) in normality scenario conditions. In other words, the normality hybrid model is the resulting calibrated physical model 200, wherein the term hybrid refers to the need of both a physics-based model 100 and a data-driven optimization algorithm 190 trained with real data in its construction.

Once the normality hybrid model 200 is developed, it can be extended or adapted to include anomaly or failure situations to study the behavior of the system (the drivetrain of a wind turbine) in anomaly or failure situations. This is represented in Figure 3A. The normality hybrid model 200, together with one or more additional models 301-306 that represent possible fault conditions, forms an extended model or fault model 400. The additional models 301-306, also referred to as failure models, can represent a large variety of models that represent different malfunctions of the wind turbine drivetrain, including, but not limiting, aerodynamic and/or mechanical malfunctions in the kinetic transformation stage 101 and/or magnetic, electrical, mechanical and/or thermal malfunctions in the electro-mechanical transformation stage 102 of the wind turbine drivetrain, such as overheatings or shortcircuits in the stator or rotor windings, demagnetization of permanent magnets, mechanical failures in a shaft or bearings, among others. A failure model 301-306 is represented by a plurality of model parameters and a set of equations that represent the faulty situation or anomaly. Therefore, a failure model enables the creation or modelling of at least one anomaly or failure situation. The failure model can be generated with new separate additional physics-based modules 301-306 representing anomaly or failure situations, or can represent specific conditions (typically faulty conditions) integrated within the main normality hybrid model 200. For example, a failure model can be represented adding an independent block to the normality hybrid model 200, or only modifying certain parameters of this last normality hybrid model 200. Alternatively, a failure model can be intrinsically integrated within the physics-based model 100 or normality hybrid model 200, to which it adds a potential faulty condition. Exemplary additional models (failure models) shown in Figure 3A and implemented as an independent block, are: aerodynamic model 301 and mechanic model 302 associated to the kinetic transformation module 101 and electric model 303, magnetic model 304, mechanic model 305 and thermal model 306 associated to the electro-mechanic transformation module 102. Non-limiting examples of other additional models, intrinsically integrated within the normality hybrid model 200, that can be used to enhance the normality hybrid model 200 with other failure situations are: shortcircuit model (for example between coils, between phases or to ground) in the stator or rotor, the reading of specific sensor (reading representing a failure), partial slot discharges model, magnetic core failure model, structural failure model, demagnetization of permanent magnets, among others.

The extended model 400 formed by the normality hybrid model 200 plus one or more additional models 301-306 that represent possible fault conditions (failure models) can be referred to as fault model 400. Figure 3B shows an example of fault model 400 formed by the normality hybrid model 200 and a thermal model 306 representing the overheating of the DFIG stator winding. The thermal model 306 is needed to represent an overheating anomaly situation. In the shown example, the inputs to the failure model (thermal model) 306 are a prediction 306-2 of one or more parameters (for example, a prediction of the stator phase currents) as predicted by the normality hybrid model 200 (prediction 280 in Figure 1) and real values 306-1 of one or more parameters (e.g. measurement values collected for example by a SCADA system), such as real values of the nacelle temperature. The failure model 306 provides a predicted output 350 which corresponds, in this exemplary case, to the temperature of the DFIG stator winding. In this case, an anomaly in the cooling system of the DFIG can be identified when the real value 306-1 of the stator winding temperature for a specific current differs in a certain amount, for example is higher in a certain amount, from the value estimated by the DT (prediction 350).

The thermal model 306 shown in Figure 3B is an example of additional model (failure model) independent from the normality hybrid model 200, because the thermal model 306 is only linked to the normality hybrid model 200 through the prediction 306-2. Depending on the failure situation to be modelled, it may happen that the failure model is more interrelated with the normality hybrid model 200, for example intrinsically integrated within the normality hybrid model 200. For example, the resulting fault model 400 may be based on the normality hybrid model 200, modified to represent the failure situation. In this case, there is no external failure model 301-306, but the failure situation is internally integrated within the normality hybrid model 200, forming the extended model 400 (fault model).

Once the fault model 400 (normality hybrid model 200 together with a representation of one or more possible fault conditions) is built, it is optimized (trained) by applying one or more data driven optimization algorithms 450 trained with real operation data in fault conditions 150', so that a fault hybrid model 500 is obtained, as shown in Figures 3A and 3C, which is an enriched (calibrated) model with real fault data. The training process schematized in Figure 3C is similar to the training process applied to the physics-based model 100 to obtain the normality hybrid model 200 (Figure 1). The calibrated new model (also referred to as fault hybrid model) is referred to as 500.

The calibration or training of the fault model 400 is performed as follows using real operation data in fault conditions 150'. Real operation data in fault conditions 150' comprises real inputs in normality conditions (discrete historical values of real operation data, typically measurements which, due to its nature (for example wind speed), cannot be considered to refer to failure conditions) 151 to the fault model 400 (e.g. measurement values of certain parameters, such as wind speed, pitch angle or mechanical torque) and real outputs in failure conditions 152' (e.g. measured outputs of certain parameters, for example, generated electric power and phase currents, corresponding or associated to the real inputs 151, but affected by the failure model) of the drivetrain of the wind turbine being modelled. Real operation data 150' are discrete values of historical data (such as SCADA data) collected at a plurality of time instants within a certain time horizon. The output data 152' used to train the fault model 400 has been previously labelled as "data in failure conditions", preferably by a human operator. Thus, the fault model 400 is trained with data in failure conditions. Using real operation data 150' (real input data 151, such as the nacelle temperature or real room temperature where the electric generator is installed), a first prediction 180', for example, a prediction 180' of the stator winding temperatures, is made. By comparing real outputs in failure conditions 152' (operation data, e.g. measurement values of, in the example, stator winding temperatures provided by the drivetrain of the wind turbine and corresponding to the given real inputs 151) with the obtained prediction 180', a residue 160' is obtained. Depending on this residue 160', at least some model parameters which define the extended model 400 are modified (stage 170'). The parameters to be modified may be parameters of the additional models 301-306, of the normality hybrid model 200 or of both of them (the complete fault model 400), depending on how the failure condition is represented. For example, some model parameters which define and represent the failure may be optimized. The exact values of these parameters have been previously estimated imposing certain physical constraints (for example, imposing values within a range of given realistic intervals). Non-limiting examples of parameters to be optimized in a failure model (for example, in particular in a thermal model) are the material thermal conductivity, the area normal to the heat flow direction, the thickness of the layer through which the conduction phenomena is carried out, the heat transfer coefficient and the surface area in contact with the air. In Figure 3C, reference 155 represents a prediction (306-2 in Figure 3B) of one or more parameters (for example, a prediction of the stator phase currents) as predicted by the normality hybrid model 200 and provided to the additional model 301-306. The calibration process is repeated n' times, as schematically represented in the lower part of Figure 3C. After n' iterations, the fault model 400 is considered a fault hybrid model 500. In general, the calibration process continues for a given number of iterations or until a point is found for which an objective function (cost function) is below a threshold.

The fault model 400 is trained by applying one or more data driven optimization algorithms 450 trained with real operation data 150', as schematically represented in Figure 3A. The optimization algorithm allows estimating, from a set of historical operating data 150' that includes a sufficient representation of the system behavior, the value of certain design variables (parameters) of the fault model 400 unknown a priori, to minimize the difference between output values (prediction) 180' of variables of the fault model 400 and real system values (outputs) 152'. The optimization algorithm shown in Figure 3C aims to minimize one or more cost functions (or objective functions). The optimization algorithm aims to find a combination of parameter values that minimize the difference between an output (prediction) of the extended model 400 and the measured operation data 150'. In embodiments of the invention, the optimization algorithm 450 used for calibrating (tuning or adjusting) parameters is a global solver which searches for a global minimum of a cost function

$$\min_{x} f(x)$$

with multivariate input variable x subject to linear and non-linear constrains, and some finite bounds. In a particular example, the objective function is defined as the mean absolute percentage error (MAPE) between the estimated parameter (prediction) and the real measured value of the parameter (the parameter being, for example, the temperature of the stator winding).

The already described training process of the fault model 400, which leads to a fault hybrid model 500, permits to simulate failure conditions present in the training operation data 150' (that is to say, in the collection of historical data, such as SCADA data, which have been used to train the fault model 400.

So far, a fault hybrid model 500 has been obtained, which takes into account anomaly or failure situations. There can be one or more fault hybrid models 500, comprising one or several failures. In particular, there may be as many fault hybrid models 500 as different failure conditions to be simulated. Therefore, the thermal model used as example in this description should not be considered in a limiting way. The thermal model should neither be considered the only possible failure model within the fault hybrid model 500. A single fault hybrid model 500 will represent (model) one failure situation or model. Alternatively, there may be as many fault hybrid models 500 as failure conditions to be modelled.

The fault hybrid model 500 has been calibrated to simulate failure conditions present in the training operation data (for example training SCADA data). However, this does not guarantee that these model executions are a representation of the entire anomalous feature space. In fact, the frequency of anomalous conditions and failures is relatively low in actual operation data (such as SCADA data 150, 150'), and often these instances are not annotated (labelled). Hence, relaying merely on deterministic models to generate synthetic failure scenarios would provide a narrow data sample constraint to patterns already seen before.

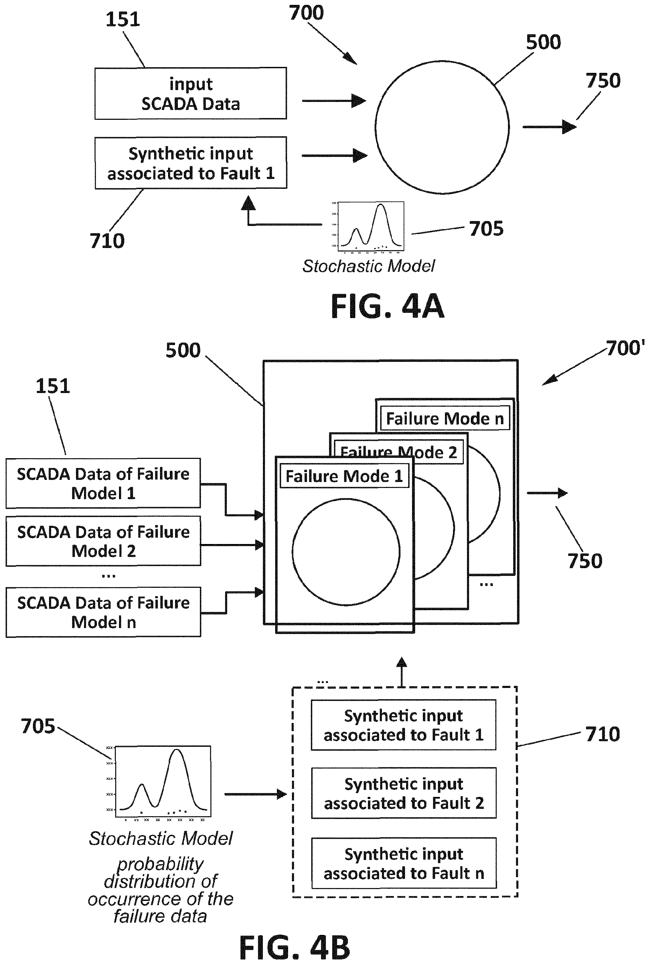

To solve this limitation, the proposed method incorporates a stage of synthetic data generation, as schematically shown in Figures 4A-4B. This process uses the previously obtained fault hybrid model 500 to generate synthetic data 750. The synthetic data generation includes a stochastic model 705, also referred to as stochastic synthetic data generation model, that estimates the probability distribution of occurrence of failure data and generates accordingly synthetic input data associated to each fault 710. In Figure 4A, a single fault condition or situation is illustrated, labelled as "Failure mode 1". Thus, two sets of failure data are fed to the fault hybrid model 500: real data 150" (such as measured, historical data) representing or associated to a failure situation, and the generated synthetic data 710 associated to the fault condition. The synthetic input data 710 and the real data of each fault 150" are used as input for the fault hybrid model 500 to generate the synthetic failure data 750. Actual labelled failure data 150" are historical real operation data (typically SCADA data) that has been identified and labelled as failure data (150' in Figure 3C). The synthetic failure data 750 are generated using the fault hybrid model 500 activated by a predetermined probability distribution 705 of occurrence of failure data 710. This probability distribution of occurrence of failure data is calculated from the observation of the labelled failure data 150".

In Figure 4B, the synthetic data generation process is incrementally completed with respect to the process of Figure 4A. It adds as many fault hybrid models 500 as required to model a collection of failure situations (labelled as "Failure Mode 1", ..., "Failure Mode n"), and a corresponding set of actual labelled failure data 150" (if any) and/or synthetic data 710 representing the respective failure situations. Like in Figure 4A, the synthetic data 710 is obtained from a stochastic model 705 that estimates the probability distribution of occurrence of failure data associated to the respective failure situations ("Failure Mode 1", ..., "Failure Mode n") and generates accordingly synthetic input data associated to each fault 710. Each fault hybrid model 500 can generate an unlimited number of synthetic failure data 750 for a particular failure type ("Failure Mode 1·, ..., "Failure Mode n") based on real failure data 150" and using the stochastic model 705.

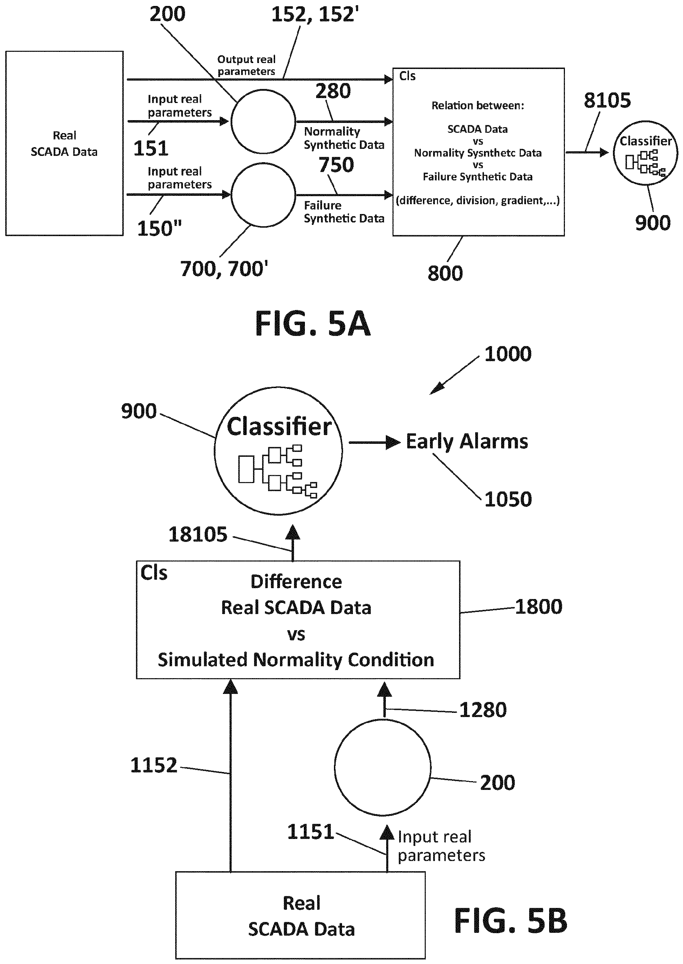

Figures 5A and 5B show a schematic block diagram of the proposed method for optimizing the operation of a drivetrain of a wind turbine. Figure 5A schematically shows the training of a failure classifier. Figure 5B schematically shows the optimization of the operation and/or maintenance of a drivetrain of a wind turbine using the trained classifier.

In Figure 5A, different stages for training a classifier 900 are represented, based on different models of the wind turbine drivetrain. In particular, both the normality hybrid model 200 (trained in normality conditions) and the fault hybrid model 500 (trained in fault conditions) are used (the fault hybrid model 500 is not shown but it is implicitly comprised in the stage 700, 700' for synthetic data generation, which refers to Figures 4A-4B). There may be different fault hybrid models 500 to represent different failure conditions ("Failure Mode 1", ..., "Failure Mode n" in Figures 4A-4B). Depending on the failures to be modelled, it may be possible to include in a single fault hybrid model 500 different failure situations, as generally represented in Figure 3A. Stages of normalization/features creation 800 and training of the failure classifier 900 are also schematically represented. In Figure 5B, the use of the trained failure classifier 900 is schematically represented to perform failure detection from actual real operation data of one or more drivetrains.

In a first stage, the normality hybrid model 200, previously generated according to the process shown in Figure 1, is fed with a set of real operation data (typically SCADA data) in normality conditions 151. The normality hybrid model 200 then provides a prediction 280 (a corresponding set of predictions). In other words, the predictions 280 are synthetic data associated to normality conditions. A prediction 280 is, for example, a normality synthetic data representing the generated electric power and at least one related signal or parameter, such as phase current.

In another stage, which can be simultaneous to the first stage, there is a failure synthetic data generation process 700, 700'. One or more fault hybrid models 500 are used to generate failure synthetic data 750 as explained with reference to Figures 4A-4B. For example, but not limiting, if the fault model is a thermal model 306, the synthetic data 750 can be a collection of synthetic failure data representing stator winding temperatures. The failure synthetic data 750 are obtained from a set of actual labelled failure data 150" as shown in Figure 5A and from synthetic data 710 representing the respective failure situations (as disclosed in Figures 4A-4B, but not shown in the schematic representation of Figure 5A).

So far, a set of normality synthetic data 280 representing a wide range of normality situations, and a set of failure synthetic data 750 for each type of failure being modelled (see for example Figures 3A-3C) have been generated. Then, a set of new features, called condition indicators, for each type of failure, is created. In the context of the present invention, a condition indicator is certain feature through which an unusual condition can be detected. Features, such as differences, division, gradients, root mean square (RMS), peak, peak to peak, kurtosis and crest factor, among others, are widely used for the wind turbine fault diagnosis. Condition indicators 8105 are generated from a labelled dataset composed of real output data 152, 152' (which can correspond to both normality conditions or failure conditions), augmented normality synthetic data 280 and augmented failure synthetic data 750 generated using the methodology already explained.

Both the normality hybrid model 200 and the fault hybrid model(s) 500 are used as a baseline to create condition indicators 8105 that may improve the accuracy of the failure classifier 900. The failure classifier 900 is a supervised classifier for failure diagnosis. To train the classifier 900, a stage (block 900) of classification of normality conditions or failure conditions of a wind turbine is included. The classifier 900 is trained with the corresponding condition indicators 8105 previously generated (block 800). In other word, the classification is trained using condition indicators 8105, whose values come from the relations between actual operation output data 152, 152', predictions (synthetic data in normality conditions) 280 and synthetic failure data 750.

At stage 800, condition indicators 8105 are calculated by establishing comparisons between different data inputted to this stage (stored output measurements 152, 152' (such as SCADA data), normality synthetic data 280 and failure synthetic data 750). Depending, for example, on the type of failure being represented by the corresponding data, a condition indicator 8105 may be, for example, the result of comparing normality synthetic data 280 with operation output data 152, 152'; or the result of comparing synthetic failure data 750 with operation output data 152, 152'; or the result of comparing synthetic failure data 750 with normality synthetic data 280; or the result of comparing synthetic failure data 750 with normality synthetic data 280 and with operation output data 152, 152'. Besides, different types of comparison operations may be established, such as difference, division, gradient, or others, applied to the data being compared. Therefore, at stage 800, a set of condition indicators 8105, is obtained. They are condition indicators for each type of failure being modelled. For example, under ideal conditions (system free of faults), condition indicators 8105 are close to zero when the comparison is between real operation data and normality synthetic data (minimal difference), while condition indicator 8105 will have a high value in fault conditions when real operation data in fault condition 152' is compared with normality synthetic data 280. A type of fault may have one or more associated condition indicators.

For example, the condition indicators 8105 can be the difference between the real current measured in the SCADA system 152, 152' and the current simulated 280 by the normality hybrid model 200. In a non-fault condition, this difference will be near to zero. If this difference exceeds a threshold value, it indicates an anomaly that will be classified in the next stage of training the failure classifier 900. Another example of condition indicator 8105 can be the difference between the real stator temperature and a value of estimated temperature in a determined failure condition. In this case, a high value of the real stator winding temperature can be compared with its corresponding failure synthetic data. If the result of this comparison is within a certain threshold, it indicates an anomaly that will be classified in the next stage of training the failure classifier 900.

The aforementioned condition indicators 8105 can also enhance the generalisation capacity of the classifier 900 allowing to train one single classifier for a plurality of turbines (for example, all of them) of an energy farm. In general, if only real data was used to train the classifier 900, it would be difficult to obtain a common threshold that serves for a wide collection of turbines. In fact, each turbine usually has a different behavior under the same operating conditions due to differences during manufacturing, different location, etc. The fact of having a single classifier 900 for a plurality of wind turbines provides many advantages. On the one hand, it facilitates the governance and scalability in cloud/edge environments as it is easier to manage a single model rather than a single model for each turbine. On the other hand, having one single classifier 900 allows us to train it with a wider range of normality and failure data in different conditions, making the model more robust.

The classification process is based on a classifier 900 developed using Supervised Machine Learning techniques. Non-limiting examples of Machine Learning techniques on which the classifier 900 is based can be k Nearest Neighbor (kNN), Random Forest (RF), Support Vector Machines (SVM), Extreme Learning Machine (ELM), among others. Due to its supervised and machine learning nature, the classifier 900 needs to be previously trained, prior to its further use for the classification of normality or failure conditions. The training is done with labelled data represented by the condition indicators 8105, which are associated to different types of failure/anomaly and therefore inform about a possible anomaly. The classifier 900 is fed with a set of condition indicators 8105, each of them associated with a label indicating "failure" or "no failure" and, in the event of "failure" label, another label representing the type of failure/anomaly.

So far, the training of the classifier 900 has been disclosed. Once the classifier 900 is trained, it is used for detecting failures (stage 1000) in the operation of a wind turbine of a wind energy farm. This is schematically represented in Figure 5B, which schematically refers to the use of the classifier 900 as failure detector when fed with condition indicators created from actual real data of the wind turbine (versus condition indicators created from historical data used to train the classifier 900). As shown in Figure 5B, actual condition indicators 18105 are obtained by comparing actual operation output data 1152 (such as SCADA data) with normality synthetic data 1280 obtained from the normality hybrid model 200 when it is fed with actual operation input data (real parameters) 1151. The comparison may involve different mathematical operations, such as difference, division, gradient, or others, applied to the data being compared. The obtained condition indicator 18105 is provided to the trained classifier 900 which outputs a label indicating "failure" or "no failure". In the event of "failure" label, another label representing the type of failure/anomaly is outputted. In the event of failure, an early alarm 1050 is generated by the classifier 900.

The detection of failures of stage 1000 can be done in real-time, that is to say, while operation data (discrete values) are collected, for example by a SCADA system. Operation data is acquired with a certain acquisition frequency, which may vary from microseconds (1 $\mu$s = $10^{-6}$ seconds), such as every 100 $\mu$s or every 1 ms, to seconds or minutes, such as every 1 second, every 1 minute or every 10 minutes. The acquisition frequency may depend on different circumstances, such as the type of parameter being acquired.

Thus, the state of the drivetrain of a wind turbine can be diagnosed by means of the classifier 900, which receives as inputs the condition indicators 18105 for different time intervals within a considered time horizon. The diagnosis result can indicate an efficient operation, a non-efficient operation, or a fault or anomaly. Depending on the diagnosis results, a message (for example, an alarm) 1050 can be provided, from which an action can be performed on the drivetrain of the wind turbine.

The proposed method optimizes the operation of a power conversion drivetrain of a wind turbine and improves efficiency in the operation of the drivetrain and/or maintenance of the drivetrain. The different models on which the method is based or which are used by the method, as well as the training of the models and the execution of the trained models, are preferably implemented in an IoT digital architecture, such as in the cloud, although it could alternatively be done locally. The different models are fed with field data (real operation data) within a certain time horizon, including historic data and actual data.

The method is implemented in one or more processing devices, which can be part of a processing system. One or more processing devices comprises at least one memory that may include instructions, for example in the form of a computer program code, so that a method according to the present invention is carried out upon execution of the instructions. The processing device may comprise a communications module, at least in embodiments in which it is communicatively coupled with other processing devices.

The proposed approach has been validated with real operational data from a 1.5MW rated power double fed induction generator wind farm. The synthetic data generation methodology has been applied into a specific failure mode, namely the stator winding overtemperature. The whole methodology and obtained results are summarized next.

APPLICATION OF THE METHOD TO A USE CASE: 1.5 MW DFIG wind turbine

The method has been applied and validated with real SCADA data from a wind turbine in operation. The drivetrain of the wind turbine has a 1.5 MW DFIG and its corresponding back-to-back power converter. Real operational data collected over three years has been imported, organized and preprocessed. Collected real operational data includes: wind speed, blade pitch angle, mechanical torque, active power, phase currents, stator winding temperatures, nacelle temperature, between others. The available data needs to be known in detail because it has an influence on the specific model topology. For example, if measurements corresponding to the mechanical torque 131 are available, a single module (second module 102) can be used to model the physics-based model 100. In case that mechanical torque is not available, a complete physics-based model (module 101 + module 102) must be used.

During the data exploration and pre-processing of SCADA data, relationships between parameters represented in the collected real operational data have been analysed in order to detect possible outliers. Non-limiting examples of such relationships are wind speed vs. generated electric power and current vs. nacelle temperature, among others. For example, in the power curve unusual values corresponding to outliers have been observed and removed to avoid confusing the model. It has been observed that these unusual values correspond, for example, to periods where there is no power generation in spite of being wind source, or periods with high temperatures in the stator winding while the generator is not generating power.

Once the initial data analysis has been carried out, a physical model 100 of the power conversion drivetrain of the wind turbine has been developed in Simulink-Matlab R2020b.

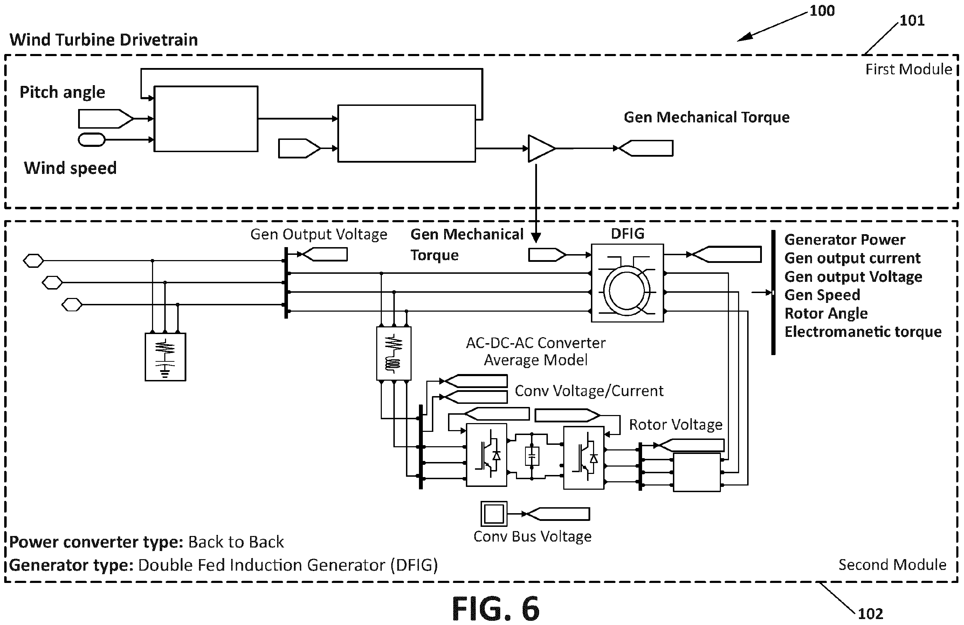

Figure 6 shows a representation of this model, composed of a first module 101 and a second module 102. Design information of both the generator and the power converter has been used as a starting point for constructing the model. However, some parameters have been calculated or estimated in the absence of information thereof. Wind speed and pitch angle are input parameters needed for operating the physical model 100. In the illustrated case, the output of the model 100 is the generated electric power and associated parameters (generated output current, generated output voltage, generated speed, rotor angle and electromagnetic torque).

In the first transformation (first module 101), the mechanical power extracted from the kinect energy in the wind is determined by the air density, the rotor swept, the wind speed and the power coefficient. The extracted mechanical power is as follows:

$$P = \tfrac{1}{2} \times \rho \times A \times v^3 \times C_p$$

where

P is the output power (W), $\rho$ is the air density (kg/m3), A is the rotor swept area (m), V is the wind speed (m/s) and Cp is the power coefficient (dimensionless), which is the ratio of extracted power by the wind turbine to the total available power in the wind source. Betz Limit, with a value of 0.59, is the maximum possible value of Cp, but wind turbines cannot operate at this value because of design requirements for reliability and durability. In practice (the real world), the $C_p$ value is usually comprised between 0.25 and 0.45.

In the second transformation (second module 102), the DFIG block implements a three-phase wound rotor asynchronous machine, operating in generator mode. The electrical part of the machine is represented by a fourth-order state-space model, and the mechanical part by a second-order system. All electrical variables and parameters are referred to the stator, indicated by the prime signs in the following machine equations. All stator and rotor quantities are in the arbitrary two-axis reference dq frame (Table 1).

Table 1. Equivalent circuits and equations involved in a DFIG conversion

| Electrical System | |
|---|---|
| | |
| q axis | d axis |
| $V_{qs} = R_s i_{qs} + d\varphi_{qs}/dt + \omega\varphi_{ds}$ (1) | $\varphi_{qs} = L_s i_{qs} + L_m i'_{qr}$ (6) |
| $V_{ds} = R_s i_{ds} + d\varphi_{ds}/dt - \omega\varphi_{qs}$ (2) | $\varphi_{ds} = L_s i_{ds} + L_m i'_{dr}$ (7) |
| $V'_{qr} = R'_r i'_{qr} + d\varphi'_{qr}/dt + (\omega - \omega_r)\varphi'_{dr}$ (3) | $\varphi'_{qr} = L'_r i'_{qr} + L_m i_{qs}$ (8) |
| $V'_{dr} = R'_r i'_{dr} + d\varphi'_{dr}/dt - (\omega - \omega_r)\varphi'_{qr}$ (4) | $\varphi'_{dr} = L'_r i'_{dr} + L_m i_{ds}$ (9) |
| $T_e = 1.5p(\varphi_{ds}i_{qs} - \varphi_{qs}i_{ds})$ (5) | $L_s = L_{ls} + L_m$ (10) |
| | $L'_r = L'_{lr} + L_m$ (11) |

| Mechanical System |
|---|
| $\dfrac{d}{dt}\omega_m = \dfrac{1}{2H}(T_e - F\omega_r - T_m)$ (12) |

(continued)

| Mechanical System |
|---|

$$\frac{d}{dt}\,\Theta_m = \omega_m \qquad (13)$$

The parameters involved in the resolution of DFIG conversion equations are those indicated in Table 2.

Table 2. Parameters involved in the DFIG operation

| Parameters | Definition |
|---|---|
| $R_s$, $L_{ls}$ | Stator resistance and leakage inductance |
| $L_m$ | Magnetizing inductance |
| $L_s$ | Total stator inductance |
| $V_{qs}$, $i_{qs}$ | q axis stator voltage and current |
| $V_{ds}$, $i_{ds}$ | d axis stator voltage and current |
| $\varphi_{qs}$, $\varphi_{ds}$ | Stator q and d axis fluxes |
| p | Number of pole pairs |
| $\omega$ | Reference frame angular velocity |
| $\omega_m$ | Mechanical angular velocity |
| $\omega_r$ | Electrical angular velocity ($\omega_m \times$ p) |
| $\Theta_m$ | Mechanical rotor angular position ($\Theta_m \times$ p) |
| $\Theta_r$ | Electrical rotor angular position ($\Theta_m \times$ p) |
| $T_e$ | Electromagnetic torque |
| $T_m$ | Shaft mechanical torque |
| J | Combined rotor and load inertia coefficient (set to infinite to simulate locked rotor) |
| H | Inertia constant |
| F | Friction coefficient |
| $L'_r$ | Total rotor inductance |
| $R'_r$ $L'_{lr}$ | Rotor resistance and leakage inductance |
| $V'_{qr}$, $i'_{qr}$ | q axis rotor voltage and current |
| $V'_{dr}$, $i'_{dr}$ dr' dr | d axis rotor voltage and current |
| $\varphi'_{qr}$, $\varphi'_{dr}$ | Rotor q and d axis fluxes |

Other parameters related with the main shaft of the drivetrain are usually also involved in the transformation. Non-limiting examples of these parameters are the wind turbine inertia constant, the shaft spring constant, the shaft mutual damping and the pitch angle.

The initial parameters of the physics-based model 100 are a generalization of the *true* value parameters (for example, stator resistance and leakage inductance, rotor resistance and leakage inductance, magnetizing inductance, total stator inductance, total rotor inductance, friction coefficient, inertia constant) involved in the operation of a given turbine. The *true* value of these parameters can be adjusted using an optimization algorithm (Figure 1). The algorithm aims to find the combination of parameter values that minimize the difference between an output of the physics-based model 100 and the measured SCADA data. In this case, the parameters have been tuned (or calibrated) with a surrogated optimization algorithm (*surrogateopt*) in Matlab (Surrogate Optimization Algorithm - MATLAB & Simulink (https://es.mathworks.com/help/gads/surrogate-optimization-algorithm.html). This optimization algorithm is a global solver specially indicated for cases where the objective function is computationally expensive. The algorithm searches for a global minimum of a cost function $\min\limits_x f(x)$ with multivariate input variable *x* subject to linear and non-linear constrains, and some finite bounds. The resulting objective function can be non-convex and non-smooth. The algorithm starts by learning a surrogate model of the objective function by interpolating a radial basis function through random evaluations of the objective function within the given bounds. In the next phase, a merit function is minimized as an approximation of the minimization of the objective function. This merit function $f_m$ is based on a weighted combination of the evaluation of the *surrogate* model calculated in the previous phase, and the distance between the points sampled from the objective function, as follows:

$$f_m(x) = wS(x) + (1-w)D(x) \qquad (14)$$

$$S(x) = \frac{s(x) - s_{min}}{s_{max} - s_{min}} \qquad (15)$$

$$D(x) = \frac{d_{max} - d(x)}{d_{max} - d_{min}} \qquad (16)$$

where, $S(x)$ is a scaled surrogated output and $D(x)$ is a scale distance between points evaluated by the objective function. This distance reflects the uncertainty in the estimations of the *surrogate* model. The minimization of the merit function, $\min_X f_m(x)$, is performed by random search. The global minimum obtained is then evaluated by the objective function and the result used to update the surrogate model. Now the minimization of the merit function is calculated on the updated model. This process continues for a given number of iterations or until a point is found for which the objective function is below a threshold.

In the case of the drivetrain of the wind turbine, the objective function is defined as the mean absolute percentage error (MAPE) between the active power estimated by the physics-based model 100 and the active power measured by the SCADA system.

$$MAPE = \frac{100\%}{n} \sum_{i=1}^{n} \left| \frac{PkW_i^{sim} - PkW_i^{real}}{PkW_i^{real}} \right| \qquad (17)$$

In the optimization process in the illustrated case, 13 parameters are involved: 4 parameters associated to the electro-mechanic conversion, 3 parameters relating to the aero-dynamical conversion, 3 parameters of the control strategy and, finally, 3 parameters associated to the mechanical drivetrain (Table 3).

Table 3. Parameter involved in the optimization process

| Aero-dynamic conversion | Electro-mechanic conversion (Generator) | Electro-mechanic conversion (Power Converter) | Control |
|---|---|---|---|
| Wind turbine inertia constant | Stator winding resistance | Power Converter Grid-side coupling resistance | DC bus voltage regulator gains |
| Shaft mutual damping | Rotor winding resistance | Power Converter Grid-side coupling inductance | Speed regulator gains |
| Shaft spring constant | Generator inertia constant | Converter Line filter capacitor | Wind speed at nominal speed and at Cp max |
| | Generator friction factor | | |

The calibration of the physics-based model has been made in two steps: in the first step, 6 variables have been considered, while in the second step 7 more variables have been added. Table shows both the initial values defined for each parameter (design value), as well as the values adopted after the second calibration step (calibrated value).

Table 4. Design and calibrated values of parameters involved in the optimization process

| Parameters to be calibrated | Design Value | Calibrated Value |
|---|---|---|
| Stator winding resistance (pu) | 0.016 | 0.0036 |
| Rotor winding resistance (pu) | 0.023 | 0.001 |
| Generator inertia constant | 0.685 | 0.1 |
| Generator friction factor | 0.01 | 0.01 |
| Power Converter Grid-side coupling resistance (pu) | 0.03 | 0.0232 |
| Power Converter Grid-side coupling inductance (pu) | 0.3 | 0.4811 |
| Converter Line filter capacitor (VAr) | 120000 | 89200 |

(continued)

| Parameters to be calibrated | Design Value | Calibrated Value |
|---|---|---|
| DC bus voltage regulator gains | 400, 8 | 323, 6.36 |
| Speed regulator gains | 0.6, 3 | 0.69, 2.67 |
| Wind speed at nominal speed and at Cp max (m/s) | 11 | 10 |
| Wind turbine inertia constant (s) | 4.32 | 2 |
| Shaft mutual damping | 1 | 1 |
| Shaft spring constant | 1.5 | 0.5 |

The new values of the calibrated parameters are established, always keeping their physical sense. In fact, an interval defining the lower and upper allowed values for each parameter has been previously established. The resulting model is an enriched physics-based model 200.

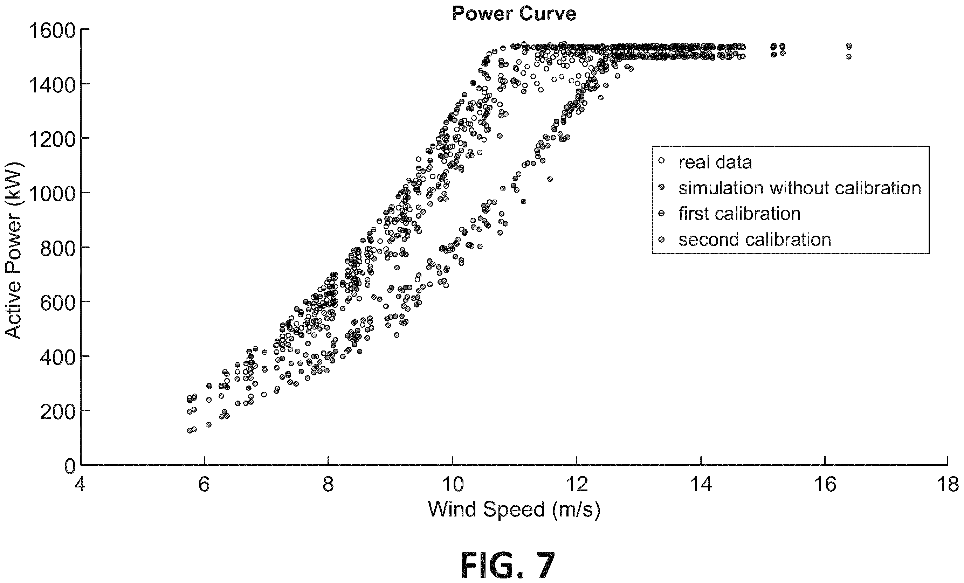

As a result, the mean absolute percentage error (MAPE) between the real active power measured in the SCADA system and the value obtained in simulation using the calibrated models (model 200) has been improved from 15% to 2,4%, as shown in Figure 7, which represents the active power (kW) versus the wind speed (m/s).

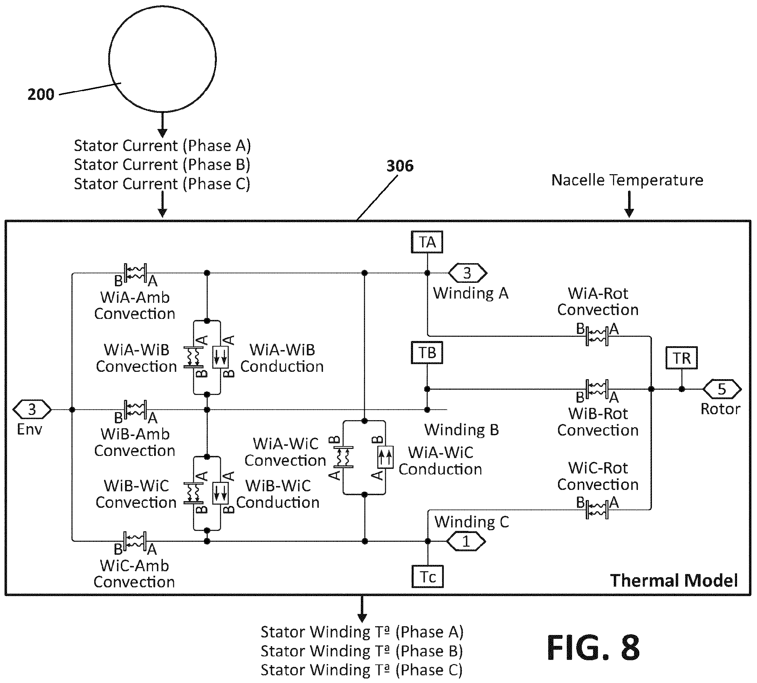

Once the physic model 100 is calibrated, an additional model 300 (in this case, a thermal model) has been added to the already developed normality hybrid model (trained physics-based model) 200 in Simulink, to estimate the temperatures in each phase of the stator winding, resulting a fault model. A scheme of the thermal model is shown in Figure 8. It must be considered that the isolation class of the stator winding is a Class F, that means that it is designed to support 155°C. As shown in Figure 8, the thermal circuit takes into account heat transference generated by the stator currents, considering the following phenomenon: conduction (between the winding of each one of the three stator phases) and convection (between the winding of each one of the three stator phases, between each stator winding and the environment and between each stator winding and the rotor). Radiation has been neglected.

Conductive heat transfer blocks model heat transfer in a thermal network by conduction through a layer of material. The rate of heat transfer is governed by Fourier's law (18) and is proportional to the temperature difference, material thermal conductivity, area normal to the heat flow direction, and inversely proportional to the layer thickness:

$$Q_{cond} = \frac{k}{s} A \, dT \qquad\qquad (18)$$

Convective heat transfer blocks model heat transfer in a thermal network by convection due to fluid motion (in this case, the air). The rate of heat transfer (19) is proportional to the temperature difference, heat transfer coefficient and surface area in contact with the fluid:

$$Q_{conv} = h_c A \, dT \qquad\qquad (19)$$

The inputs that feed the thermal model are the stator currents and the room temperature where the electric generator is installed (in this case the temperature of the nacelle), while the outputs are the temperatures of each phase of the stator winding.

Following the same process used in the normality hybrid model, this fault model is trained using the operation real SCADA data (figure 3C). Similarly, the training consists of optimizing the values of certain independent design parameters that represent the failure, whose exact values have been estimated between given realistic intervals. In this case, these parameters are the material thermal conductivity, the area normal to the heat flow direction, the thickness of the layer through which the conduction phenomena is carried out, heat transfer coefficient and surface area in contact with the air. After this training, the fault hybrid model is generated.

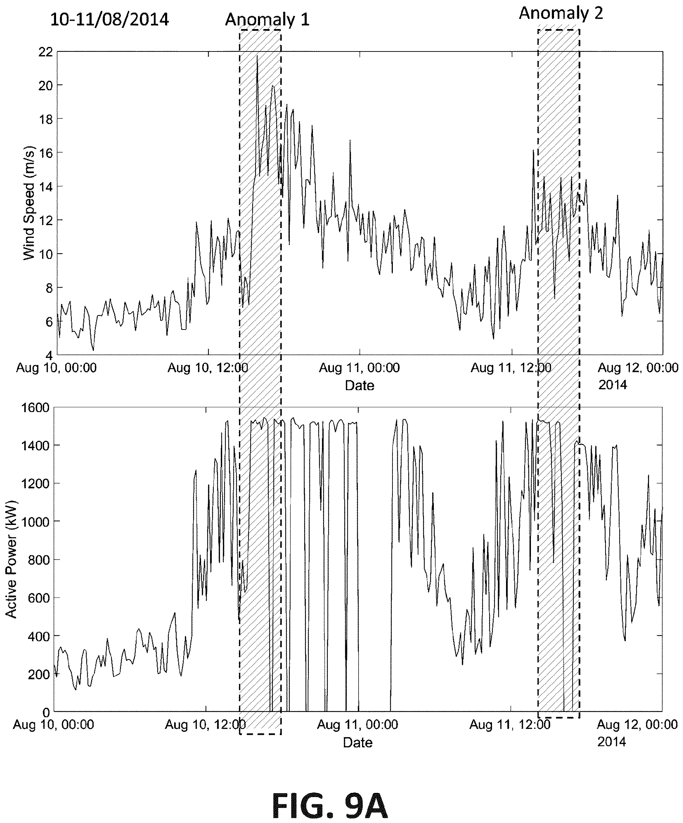

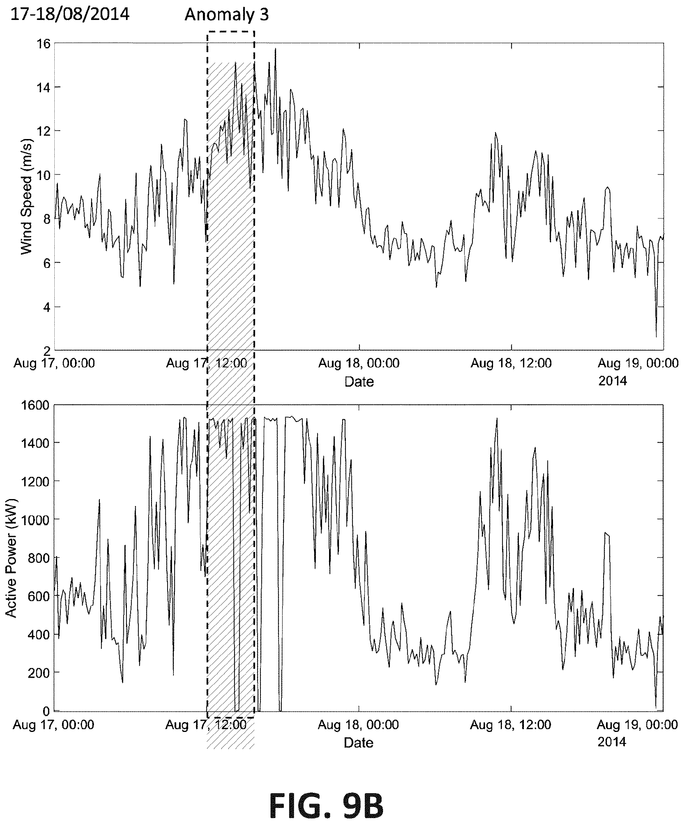

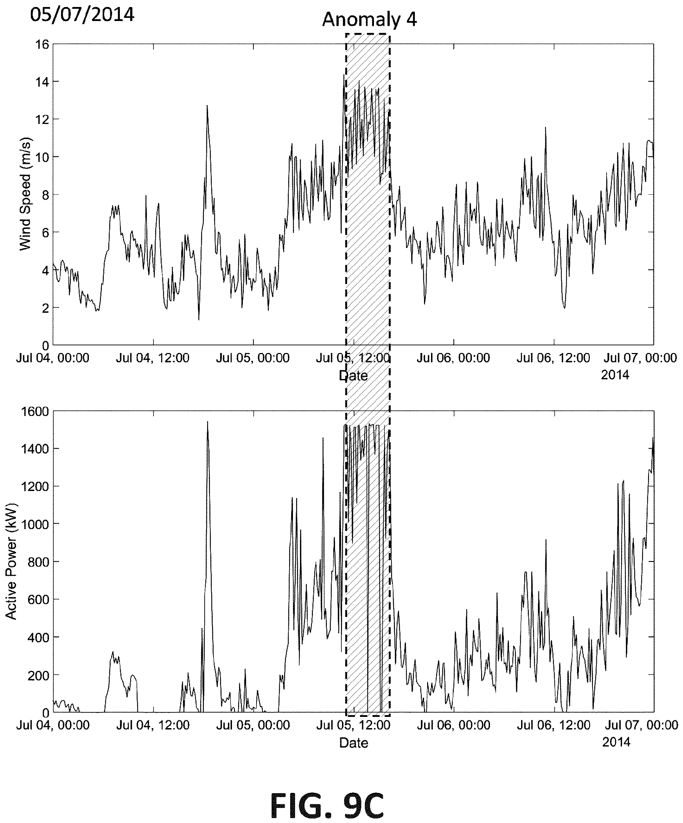

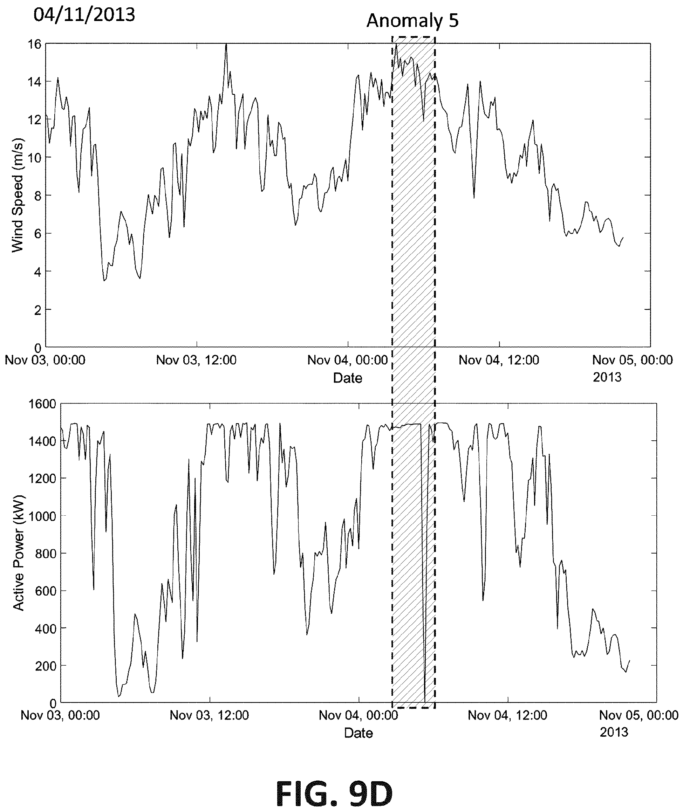

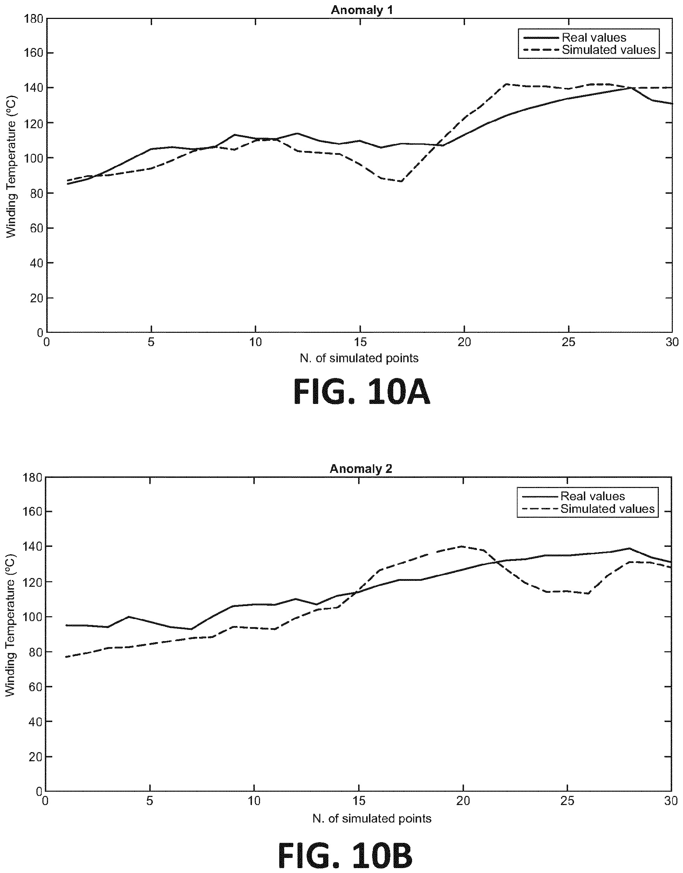

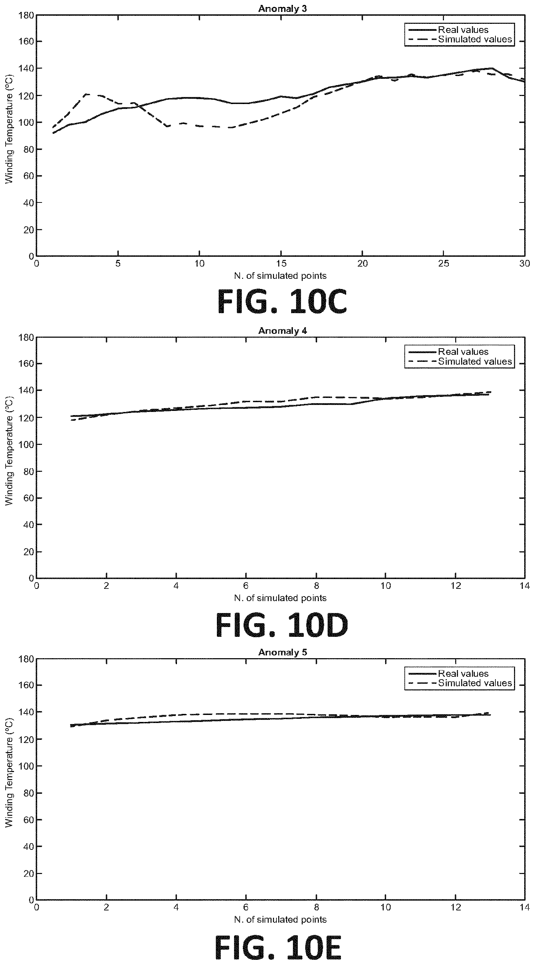

In the real data available during the analysis and execution of this use case, there are five anomaly-cases labelled as overtemperature in the stator winding, as shown in Figures 9A, 9B, 9C and 9D, which represent the wind speed (m/s) and active power (kW) at different time intervals. The fault modelling has been validated using data during these five anomaly-cases, obtaining the results of estimated stator winding temperatures shown in Figures 10A-10E, wherein they are compared with real SCADA winding temperature. The MAPE between real stator winding temperature values measured in the SCADA system and the values obtained in simulation using the fault hybrid model has a value of 11%, being the maximum percentage error of 16% in the worst scenario. This value has still room for improvement if more accurate design data is available for the thermal model.

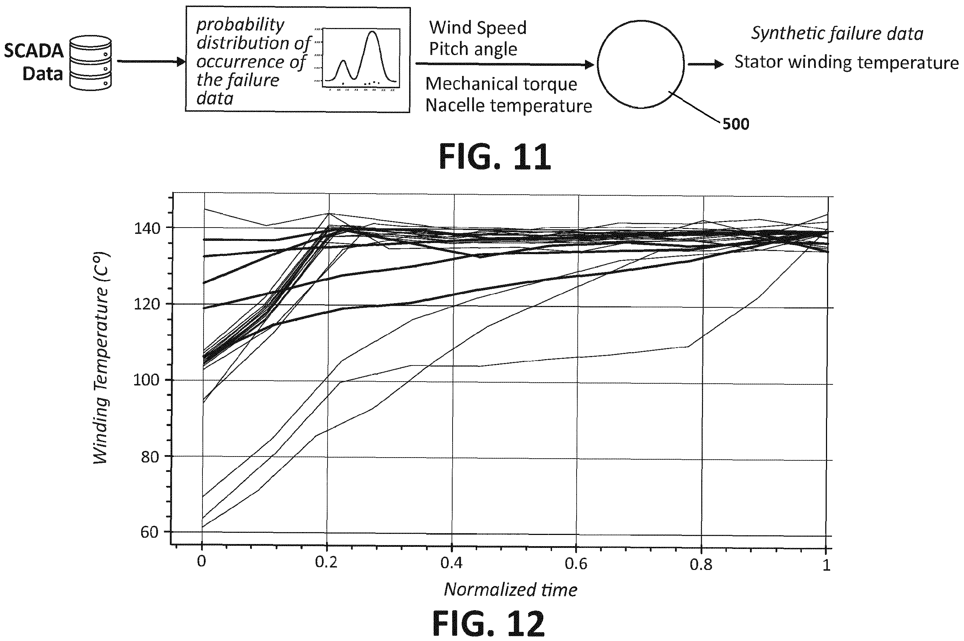

Figure 11 schematically shows a methodology for synthetic failure data generation applied to an electric generator stator winding overheating scenario formed of a data-driven stochastic failure model and a fault hybrid model. Synthetic inputs associated to faults are randomly generated using the learnt statistical distributions as shown in Figure 11 and are fed as inputs into the developed fault hybrid model 500 (Figure 4A-4B). The fault hybrid model 500 generates the rest of synthetic failure data (e.g. stator winding temperature).

Figure 12 shows both the stator winding temperature values calculated by the fault hybrid model, taking as input variables those generated synthetically (ambient temperature, wind speed, nacelle temperature), in non-bold lines, as well as the stator winding real values measured by the SCADA system (bold lines).

A condition indicator has been created as the difference between the stator winding temperature calculated using the fault hybrid model and the real stator winding temperature measured in the SCADA, and it allows to make a classification for detecting real cooling problems. This will cause the triggering of an alarm. This is a simple rule-based classifier. In addition, a benchmarking analysis with other more complex classifiers has been done using multiple features (e.g. wind speed, torque, difference in stator winding temperature, difference in nacelle temperature, etc.) and different algorithms such as KNN and Random Forest.

In sum, a hybrid model-based digital twin, which combines the benefits of physics-based models with advanced data analytics techniques, has been implemented. The proposed digital twin performs very efficiently to control/supervise the operation of a power conversion drivetrain of a wind turbine, improve efficiency (optimizing) in the operation of the drivetrain and/or improve the maintenance of the drivetrain.

Among the different advantages of the method based on the proposed digital twin: On the one hand, , the procedure for generating synthetic failure data based on real data leveraging different statistical techniques. On the other hand, the classification model to detect anomalies in the operation of the wind turbine drivetrain. These two innovations allow to solve the main limitations of the current digital twin approaches regarding accuracy, explainability and lack of sufficient training data.

In this text, the term "comprises" and its derivations (such as "comprising", etc.) should not be understood in an excluding sense, that is, these terms should not be interpreted as excluding the possibility that what is described and defined may include further elements, steps, etc.

In the context of the present disclosure, the term "approximately" and terms of its family (such as "approximate", etc.) should be understood as indicating values very near to those which accompany the aforementioned term. That is to say, a deviation within reasonable limits from an exact value should be accepted, because a skilled person in the art will understand that such a deviation from the values indicated is inevitable due to measurement inaccuracies, etc. The same applies to the terms "about", "around" and "substantially".

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

**Claims**

1.  - A computer-implemented method for training a classifier for failure diagnosis of a drivetrain of a wind turbine, comprising:

    training a physics-based model (100) of a drivetrain of a wind turbine with operation data (151, 152) of the drivetrain in normality conditions, thus providing a normality hybrid model (200) of the drivetrain of the wind turbine;
    modelling at least one anomaly situation in the normality hybrid model (200) and training it with operation data (151, 152') of the drivetrain in failure conditions, thus providing a fault hybrid model (500) of the drivetrain of the wind turbine;
    applying a set of input data of the drivetrain in normality conditions (151) to the normality hybrid model (200), thus obtaining a set of synthetic data in normality conditions (280) for a certain parameter of the drivetrain;
    applying a set of failure data (150") and a set of synthetic input data (710) associated to the at least one anomaly situation of the drivetrain to the fault hybrid model (500), thus generating a set of synthetic failure data (750) for the at least one anomaly situation;
    from a set of output data of the drivetrain (152, 152'), the obtained set of synthetic data in normality conditions (280) and the set of synthetic failure data (750) for the at least one anomaly situation, obtaining a set of condition indicators (8105) for the at least one anomaly situation;
    training a classifier (900) with the set of condition indicators (8105) for the at least one anomaly situation.

2.  The method of claim 1, wherein the physics-based model (100) of the drivetrain of the wind turbine comprises a first module (101) representing an aero-dynamical conversion stage of the drivetrain and a second module (102) representing an electro-mechanical conversion stage of the drivetrain.

3. The method of any one of the preceding claims, wherein the normality hybrid model (200) is obtained as follows:

providing a physics-based model (100) of the drivetrain of the wind turbine, the physics-based model (100) being represented by a plurality of model parameters and a set of equations representing energy conversion in the drivetrain of the wind turbine;
feeding the physics-based model (100) with operation data (151, 152) of the drivetrain in normality conditions, the operation data comprising real operation data inputs (151) and real operation data outputs (152);
obtaining a prediction (180) of at least one of the following parameters: generated electric power, phase currents, phase voltages and electromagnetic torque;
selecting values of at least some of the model parameters, wherein said values minimize a difference between said prediction (180) and real operation data outputs (152) corresponding to said real operation data inputs (151), thus obtaining the physics-based model (200) trained with operation data.

4. The method of any one of the preceding claims, wherein the fault hybrid model (500) is obtained as follows:

modelling at least one anomaly situation in the normality hybrid model (200);
feeding the normality hybrid model (200) which includes at least one modelled anomaly situation with operation data (151, 152') of the drivetrain in failure conditions;
obtaining a prediction (180') of a parameter indicative of a faulty situation;
selecting values of at least some of the model parameters defining the normality hybrid model (200) modelled with at least one anomaly situation, wherein said values minimize a difference between said prediction (180') and real operation data outputs (152') corresponding to the real operation data inputs (151), thus obtaining the calibrated fault-hybrid model (500).

5. The method of claim 4, wherein the at least one anomaly situation is modelled by means of at least one failure model (301-306).

6. The method of claim 5, wherein the at least one failure model (301-306) is represented by a plurality of failure parameters and a set of equations representing a failure in the energy conversion of the drivetrain of the wind turbine.

7. - A computer-implemented method for optimizing the operation of a drivetrain of a wind turbine, comprising using the classifier (900) as trained in any one of the preceding claims.

8. - The computer-implemented method of claim 7, comprising:

from actual operation output data (1152) and normality synthetic data (1280) obtained from the normality hybrid model (200) when it is fed with actual operation input data (1151), obtaining a condition indicator (18105);
providing the condition indicator (18105) to the trained classifier (900);
outputting by the trained classifier (900) whether the condition indicator (18105) corresponds to a failure situation or to a non-failure situation.

9. - The computer-implemented method of claim 7, further comprising:
when the classifier (900) determines that the drivetrain operates under anomaly conditions, triggering an alarm.

10. - The computer-implemented method of any one of claims 8-9, further comprising, when the condition indicator (18105) corresponds to a failure situation, actuating on the drivetrain of the wind turbine.

11. - A device comprising processing means configured to perform the method of any one of claims 1-6.

12. - A device comprising processing means configured to perform the method of any one of claims 7-10.

13. - A computer program product comprising computer program instructions/code for performing the method according to any one of claims 1-6 and/or the method according to any one of claims 7-10.

14. - A computer-readable memory/medium that stores program instructions/code for performing the method according to any one of claims 1-6 and/or the method according to any one of claims 7-10.

**FIG. 1**

**FIG. 2A**

**100**

**101**

**102**

**121**

First Module

Second Module

**141**

DFIG stator

~

rotor

**131**

AC/DC    DC/AC

Partial-scale
power converter

Grid

## FIG. 2B

**200**

**100**

**Normality Hybrid Model**

Data driven
Optimisation
Algorithms
(subrogate
optimization)
trained with
normality
data

**101**

**102**

**190**

## FIG. 2C

**FIG. 3A**

**FIG. 3B**

**FIG. 3C**

151   700                                    500
                                                      750

┌─────────────────┐
│     input       │                    ◯
│  SCADA Data     │  ───────▶
└─────────────────┘

┌─────────────────┐
│  Synthetic input │  ───────▶
│ associated to Fault 1 │
└─────────────────┘
                                705
710                    Stochastic Model

# FIG. 4A

500                                        700'

151

┌─────────────────┐          ┌──────────────────────────┐
│ SCADA Data of Failure │     │        Failure Mode n    │
│     Model 1     │  ──▶      │   ┌────────────────────┐ │
└─────────────────┘          │   │   Failure Mode 2   │ │
┌─────────────────┐          │ ┌─────────────────────┐│ │
│ SCADA Data of Failure │    │ │  Failure Mode 1     ││ │
│     Model 2     │  ──▶      │ │      ◯              ││ │   ──▶
└─────────────────┘          │ │                     ││ │        750
       ...                   │ │                     │┘ │
┌─────────────────┐          │ │              ...    │  │
│ SCADA Data of Failure │    │ └─────────────────────┘  │
│     Model n     │  ──▶      └──────────────────────────┘
└─────────────────┘

705                          ┌ ─ ─ ─ ─ ─ ─ ─ ─ ─ ─ ─ ─ ┐
                               ...
                             │ ┌────────────────────┐   │
                             │ │   Synthetic input  │   │
                             │ │ associated to Fault 1 │   │   710
                             │ └────────────────────┘   │
                             │ ┌────────────────────┐   │
Stochastic Model             │ │   Synthetic input  │   │
   probability               │ │ associated to Fault 2 │   │
 distribution of             │ └────────────────────┘   │
 occurrence of the           │ ┌────────────────────┐   │
   failure data              │ │   Synthetic input  │   │
                             │ │ associated to Fault n │   │
                             │ └────────────────────┘   │
                             └ ─ ─ ─ ─ ─ ─ ─ ─ ─ ─ ─ ─ ┘

# FIG. 4B

FIG. 5A

FIG. 5B

**FIG. 6**

EP 4 311 934 A1

**FIG. 7**

FIG. 8

**FIG. 9A**

**FIG. 9B**

FIG. 9C

EP 4 311 934 A1

FIG. 9D

**FIG. 10A**

**FIG. 10B**

**FIG. 10C**

**FIG. 10D**

**FIG. 10E**

FIG. 11

FIG. 12

EP 4 311 934 A1

Europäisches
Patentamt

European
Patent Office

Office européen
des brevets

# EUROPEAN SEARCH REPORT

Application Number

EP 22 38 2724

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/142542 A1 (SENTIENT SCIENCE CORP [US]; ACCIONA ENERGIA SA [ES]) 9 July 2020 (2020-07-09) * paragraphs [0021] - [0069] * * figures * | 1-14 | INV. F03D17/00 F03D80/50 F03D7/04 |
| X | US 2019/236456 A1 (KIM YOUNGHUN [US] ET AL) 1 August 2019 (2019-08-01) * paragraphs [0030] - [0135] * * figures * | 1-14 | |
| X | US 2020/210538 A1 (WANG YAJUAN [US] ET AL) 2 July 2020 (2020-07-02) * paragraphs [0033] - [0278] * * figures * | 1-14 | |
| X | US 11 188 691 B2 (UTOPUS INSIGHTS INC [US]) 30 November 2021 (2021-11-30) * column 5, line 26 - column 30, line 27 * * figures * | 1-14 | |
| A | CN 114 463 143 A (SHANGHAI ELECTRIC POWER UNIV) 10 May 2022 (2022-05-10) * abstract * * figures * | 1-14 | TECHNICAL FIELDS SEARCHED (IPC) F03D G06K |

The present search report has been drawn up for all claims

| Place of search | Date of completion of the search | Examiner |
|---|---|---|
| The Hague | 19 December 2022 | Rini, Pietro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 38 2724

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2022

| Patent document cited in search report | Publication date | Patent family member(s) | Publication date |
|---|---|---|---|
| WO 2020142542 A1 | 09-07-2020 | AU 2019417827 A1 | 19-08-2021 |
| | | CL 2021001743 A1 | 03-06-2022 |
| | | CN 113614359 A | 05-11-2021 |
| | | EP 3906360 A1 | 10-11-2021 |
| | | JP 2022516159 A | 24-02-2022 |
| | | PE 20220148 A1 | 27-01-2022 |
| | | US 2022082090 A1 | 17-03-2022 |
| | | WO 2020142542 A1 | 09-07-2020 |
| US 2019236456 A1 | 01-08-2019 | EP 3752796 A1 | 23-12-2020 |
| | | US 2019236456 A1 | 01-08-2019 |
| | | WO 2019152559 A1 | 08-08-2019 |
| US 2020210538 A1 | 02-07-2020 | AU 2019413432 A1 | 22-07-2021 |
| | | EP 3902992 A1 | 03-11-2021 |
| | | US 2020210538 A1 | 02-07-2020 |
| | | US 2021232731 A1 | 29-07-2021 |
| | | WO 2020140103 A1 | 02-07-2020 |
| US 11188691 B2 | 30-11-2021 | US 2020201950 A1 | 25-06-2020 |
| | | US 2022245297 A1 | 04-08-2022 |
| CN 114463143 A | 10-05-2022 | NONE | |

EPO FORM P0459

For more details about this annex : see Official Journal of the European Patent Office, No. 12/82

**REFERENCES CITED IN THE DESCRIPTION**

**Non-patent literature cited in the description**

- Wind Energy in Europe: 2020 Statistics and the outlook for 2021-2025. *WindEurope, https://windeurope.org/intelligence-platform/product/wind-energy-ineurope-in-2020-trends-and-statistics*
- *Wind energy digitalisation towards 2030. Cost reduction, better performance, safer operations,* November 2021, https://windeurope.org/intelligence-platform/product/wind-energy-digitalisation-towards-2030
- Wind Turbine Technologies. **HANSEN AD.** Wind Energy Engineering: A Handbook for Onshore and Offshore Wind Turbines. 2017, 145-160
- **HANSEN AD ; LOV F ; BLAABJERG F ; HANSEN LH.** Review of Contemporary Wind Turbine Concepts and Their Market Penetration. *Wind Engineering,* 2004, vol. 28 (3), 247-263
- **S. MULLER ; M. DEICKE ; R. W. DE DONCKER.** Doubly fed induction generator systems for wind turbines. *IEEE Industry Applications Magazine,* May 2002, vol. 8 (3), 26-33
- **F. BLAABJERG ; M. LISERRE ; K. MA.** Power electronics converters for wind turbine systems. *2011 IEEE Energy Conversion Congress and Exposition,* 2011, 281-290
- **M. K. DHAR ; M. THASFIQUZZAMAN ; R. K. DHAR ; M. T. AHMED ; A. A. MOHSIN.** Study on pitch angle control of a variable speed wind turbine using different control strategies. *2017 IEEE International Conference on Power, Control, Signals and Instrumentation Engineering (ICPCSI),* 2017, 285-290

- **K. ALEWINE ; W. CHEN.** A review of electrical winding failures in wind turbine generators. *IEEE Electrical Insulation Magazine,* July 2012, vol. 28 (4), 8-13
- Condition Monitoring of Rotating Electrical Machines. **TAVNER, P.J. ; RAN, LI ; PENMAN, JIM ; SEDDING, HOWARD.** Bibliovault OAI Repository. University of Chicago Press, 2008
- Wind energy facility reliability and maintenance. **E. BYON ; L. NTAIMO ; C. SINGH ; Y. DING.** Handbook of Wind Power Systems. 639-672
- **SHAFIEE ; DINMOHAMMADI.** *An FMEA-Based Risk Assessment Approach for Wind Turbine Systems: A Comparative Study of Onshore and Offshore,* 2014
- **T. GERBER ; N. MARTIN ; C. MAILHES.** Time-Frequency Tracking of Spectral Structures Estimated by a Data-Driven Method. *IEEE Transactions on Industrial Electronics,* October 2015, vol. 62 (10), 6616-6626
- **S. YIN ; W. GUANG ; H. R. KARIMI.** Data-driven design of robust fault detection system for wind turbines. *Mechatronics,* December 2014, vol. 24 (4), 298-306
- **E. ALIZADEH ; N. MESKIN ; K. KHORASANI.** A negative selection immune system inspired methodology for fault diagnosis of wind turbines. *IEEE Trans Cybern, PP,* 2016, vol. 99, 1-15
- **M. LI ; D. YU ; Z. CHEN ; K. XIAHOU ; T. JI ; Q. H. WU.** A Data-Driven Residual-Based Method for Fault Diagnosis and Isolation in Wind Turbines. *IEEE Transactions on Sustainable Energy,* April 2019, vol. 10 (2), 895-904